# EUROPÄISCHE PATENTSCHRIFT

(11) **EP 2 016 309 B1**
(45) Veröffentlichungstag und Bekanntmachung des Hinweises auf die Patenterteilung: **18.08.2010**
(21) Anmeldenummer: 07724490.3
(22) Anmeldetag: 24.04.2007
(51) Int. Cl.: F16H 57/04

(54) **KÜHLER FÜR GETRIEBE, GETRIEBE MIT KÜHLVORRICHTUNG, BAUKASTEN VON GETRIEBEKÜHLVORRICHTUNGEN UND BAUREIHE VON GETRIEBEN**
COOLER FOR TRANSMISSION, TRANSMISSION WITH COOLING DEVICE, MODULAR SYSTEM OF TRANSMISSION COOLING DEVICES, AND TYPE SERIES OF TRANSMISSIONS
RADIATEUR POUR BOITE DE VITESSES, BOITE DE VITESSES AVEC UN DISPOSITIF DE REFROIDISSEMENT, GROUPE DE DISPOSITIFS DE REFROIDISSEMENT DE BOITES DE VITESSES ET SERIE DE BOITES DE VITESSES

(30) Priorität: 03.05.2006 DE 102006020801
(43) Veröffentlichungstag der Anmeldung: 21.01.2009
(73) Patentinhaber: SEW-EURODRIVE GmbH & Co. KG, 76646 Bruchsal (DE)
(72) Erfinder: SAAR, Steffen, 67376 Harthausen (DE); LEONHARD, Steffen, 75438 Knittlingen (DE); MULLER, Manfred, 76698 Ubstadt-Weiher (DE)
(86) Internationale Anmeldenummer: PCT/EP2007/003560
(87) Internationale Veröffentlichungsnummer: WO 2007/124885

(56) Entgegenhaltungen:
- EP-A- 0 853 225
- EP-A2- 1 004 799
- DE-A1-102004 022 863
- JP-A- 2002 005 270

## Beschreibung

Die Erfindung betrifft einen Kühler für Getriebe, ein Getriebe mit Kühlvorrichtung, einen Baukasten von Getriebekühlvorrichtungen und eine Baureihe von Getrieben.

Aus der DE 40 29 641 ist ein Gehäuse eines Zahnräderwechselgetriebes bekannt, bei dem ein Deckel als Öl/Luft-Wärmetauscher.ausgebildet ist.

Aus der EP 0 853 225 ist ein Kühler für das Öl im Gehäuse eines Getriebes bekannt, bei dem das Gehäuse eine Wärmetauschers als Deckel in eine Öffnung des Getriebegehäuses einsetzbar ist, wobei die dem Inneren des Getriebegehäuses zugekehrte Wand des Wärmetauschergehäuses die Wärmetauscherplatte bildet.

Aus der DE 10 2004 022 863 ist ein Getriebe und ein Baukasten von Getrieben bekannt, bei dem.ein Deckel des Getriebegehäuses nach außen ragende Kühlfinger aufweist, die dort als Kühlvorrichtung bezeichnet sind.

Aus der JP 2002- 005270 A ist ein Getriebe bekannt, bei dem ein Verschlussteil nach innen und nach außen gerichtete Kühlrippen aufweist.

Aus der gattungsgemässen EP 1 004 799 A2 ist eine Antriebseinheit mit Kühlvorrichtung für ein in der Antriebseinheit eingesetztes Schmiermittel bekannt, wobei die Kühlvorrichtung ebenfalls gehäusebildend ist.

Aus der EP 0 853 225 A2 ist ein Flüssigkeits-Kühler bekannt, der aus dünnen Blechteilen zusammengesetzt ist.

Aus der DE 10 2004 022 863 A1 ist ein passiver Kühler bekannt, der als Gehäuseteil eines Getriebes ausgeführt ist.

Der Erfindung liegt die Aufgabe zugrunde, ein Getriebe so weiterzubilden, dass die Getriebekühlung verbessert ist.

Erfindungsgemäß wird die Aufgabe bei dem Kühlmodul für ein Getriebe nach den in Anspruch 1 angegebenen Merkmalen gelöst.

Von Vorteil ist dabei, dass eine Verbesserung des Wärmeabtransportes aus dem Getriebeinneren mittels einer vergrößerten Oberfläche im Raumbereich des Ölstroms zwischen dem Teil oder den Teilen und dem Gehäuse vorsehbar ist. Somit ist der Innenraum des Getriebes von einer Kühlvorricht,ung besser ausnutzbar. Denn der Ölstrom innerhalb des Getriebes ist an derjenigen Oberfläche des Kühlmoduls vorbeileitbar, welche mittels der ins Getriebeinnere hineinragenden Ausformung vergrößert ist. Dadurch ist ein geringerer Abstand zwischen Wärmequelle und Kühlmodul-Oberfläche erreichbar, und der Wärmeübergang ist verbessert. Außerdem ist der Ölstrom besser ausgenutzt. Denn der wesentliche Anteil des Ölstromes ist nun derart leitbar, dass er in Kontakt kommt mit der Oberfläche zum Wärmeableiten. Insbesondere ist die Ausformung vorteilhaft derart nahe an die Verzahnteile heranführbar, dass nur unwesentliche Teile des Ölstroms verloren gehen für die Wärmeableitung ans Kühlmodul. Außerdem ist ein Schmiermittel verwendbar, das höhere Viskosität aufweist als Öl, beispielsweise Schmierfett oder Fett. Ein solcher Schmierstoff klebt zumindest teilweise am Verzahnteil, solange die Temperatur des Getriebes niedrig ist. Mittels der Erfindung können die nahe herangeführten Ausformungen dennoch mit diesem Schmierstoffanteil in Kontakt kommen.

Bei einer weiteren vorteilhaften Ausgestaltung umfasst das Kühlmodul ein Gussteil, wobei im Gussteil ein Raumbereich für strömendes Kühlmittel, insbesondere Öl oder Luft oder Wasser, vorgesehen ist, und wobei am Gussteil ins Getriebeinnere gerichtete Kühlrippen und/oder Kühlfinger angebracht sind, insbesondere mit dem Gussteil einstückig ausgeformte oder an das Gussteil angeschweißte. Das Kühlmodul weist somit eine in Längsrichtung des Gussteils variable Dicke auf. Von Vorteil ist dabei, dass zwei getrennte Raumbereiche vorsehbar sind, ein erster für ein strömendes Kühlmittel, beispielsweise Luft, Wasser oder Öl, und ein zweiter, im Getriebeinneren gelegener, für den Kontakt von Kühlrippen oder Kühlfingern mit im Getriebegehäuse strömendes Öl, also Schmieröl. Somit ist vorteilhaft ein dickes Metallteil als Gussteil vorsehbar, wodurch das Kühlmodul robust ist gegenüber mechanischen Beanspruchungen. Von Vorteil ist weiterhin, dass durch die Trennung der zwei Raumbereiche redundante Sicherheit erreichbar ist gegen Vermischung von Kühlmittel und Schmieröl. Denn selbst wenn eine Dichtung des Raumbereichs für das Kühlmittel undicht werden sollte, so würde das Kühlmittel nicht in das Getriebeinnere eintreten können sondern außerhalb des durch das Gussteil abgeschlossenen Getriebeinneren fließen.

Bei einer weiteren vorteilhaften Ausgestaltung folgt die dem Getriebeinneren zugewandte Ausformung des Kühlmoduls der Form eines rotierenden Teils oder mehrerer rotierender Teile des Getriebes derart, dass Wärme aus dem Raumbereich, insbesondere im Wesentlichen aus dem gesamten Raumbereich, des Ölstroms zwischen dem oder den Teilen und dem Gehäuse abtransportierbar ist. Somit ist vorteilhaft zur Verbesserung der Wärmeabfuhr vom Öl an die Getriebeumgebung in Raumbereichen des Ölstroms Wärme durch die Ausformung aufnehmbar. Besonders vorteilhaft wird ein Folgen der Form eines rotierenden Teils des Getriebes erreicht, wenn um das rotierende Teil ein konzentrischer Kreis oder eine konzentrische Ellipse mit kleiner Exzentrizität gezeichnet werden kann, der oder die mit der mathematisch idealisierten Oberfläche der Ausformung gemeinsame Punkte hat, der oder die aber das mathematisch Innere der Ausformung nicht schneidet. Die Form der Ausformung, und also auch das Folgen der Form des rotierenden Teils, ist vorteilhaft derart vorgesehen, dass der durch das rotierende Teil erzeugte Schmierstoffstrom oder Ölstrom zur Wärmeableitung möglichst vollständig in Kontakt bringbar ist mit der Oberfläche der Ausformung. Dabei soll der Strömungswiderstand für den Strom klein gehalten sein.

Bei einer weiteren vorteilhaften Ausgestaltung ist die Form der Ausformung so gewählt, dass einerseits die Zahnräder oder Verzahnteile, beispielsweise Zykloscheiben oder Exzenterscheiben, des Getriebes für die verschiedenen Übersetzungszahlen, mit denen das Getriebe ausrüstbar ist, in ihrer bestimmungsgemäßen Bewegung nicht durch die Ausformung gehemmt werden, andererseits die Ausformung möglichst dicht zumindest teilweise dem von den rotierenden Teilen, insbesondere den Zahnrädern, überstrichenen Bereich folgt, um von den rotierenden Teilen, insbesondere den Zahnrädern, weggeschleudertes Öl gut aufnehmen zu können. Von Vorteil ist dabei, dass der Abstand der Ausformung zu einem rotierenden Teil oder mehreren rotierenden Teilen so klein wie möglich ist. Der minimale Abstand der Ausformung zu den rotierenden Teilen ist dabei hauptsächlich durch die Fertigungstoleranzen des Getriebegehäuses und des Kühlmoduls bestimmt. Bei Getrieben mit kleiner durchgeleiteter Leistung ist zusätzlich vorteilhaft durch Wahl des Abstandes zu den rotierenden Teilen erreichbar, dass der Wirkungsgrad des Getriebes nicht wesentlich durch Reibung des Öls zwischen Ausformung und rotierenden Teilen vermindert wird, bedingt insbesondere beim Anlaufen bei niedrigen Temperaturen durch Verkleben des Öls. Von Vorteil ist dabei, dass eine Baureihe von Getrieben, deren Getriebe-Varianten sich lediglich durch die Auswahl von Zahnrädern in ihrer Übersetzungszahl unterscheiden, mit einem einheitlichen Kühlmodul ausrüstbar ist.

Bei einer weiteren vorteilhaften Ausgestaltung umfasst die Schnittstelle zur dicht abschließenden Verbindung des Kühlmoduls mit dem Getriebe eine Dichtung, wobei insbesondere die Ausformung durch die von der Dichtung berandete Minimalfläche ins Innere des Getriebes ragt. Die von der Dichtung berandete Minimalfläche dient dabei zur Trennung von Innerem und Äußerem des Getriebegehäuses bezüglich der zur Schnittstelle gehörenden Öffnung. Die Minimalfläche ergibt sich, indem die Dichtung auf eine idealisierte geschlossene Linie reduziert wird, die die Öffnung umläuft und somit beschreibt, und indem in die Linie ein Teilstück einer Seifenblase eingesetzt wird, deren Rand durch die geschlossene Linie gebildet wird und die ansonsten sich selbst überlassen wird. Mit dem Kühlmodul ist also allgemein eine Ausnehmung, insbesondere Öffnung, im Getriebegehäuse verschließbar, deren Umrandung eine Minimalfläche begrenzt, durch welche die Ausformung ins Innere des Getriebes hindurch ragt. Somit wird vorteilhaft der Innenraum des Getriebes, der sich an die Schnittstelle anschließt, von dem Kühlmodul zur Wärmeaufnahme genutzt.

Bei einer weiteren vorteilhaften Ausgestaltung umfasst die Ausformung Rippen, die insbesondere schlitzförmige Unterbrechungen aufweisen, wobei der äußere Rand der Rippen der Form eines rotierenden Teils oder mehrerer rotierender Teile des Getriebes folgt. Somit bilden die Rippen vorteilhaft Oberflächen aus, die einerseits den Ölstrom führen und andererseits aus dem Ölstrom Wärme aufnehmen. Der Abstand der Rippen untereinander ist vorteilhaft gemäß der Viskosität des Schmieröls minimal derart wählbar, dass ein Strömen des Öls in den Zwischenräumen zwischen den Rippen mit geringem Strömungswiderstand erfolgt. Der Abstand der Rippen und die Dicke der Rippen wird insbesondere vorteilhaft durch das vorgesehene Fertigungsverfahren bestimmt.

Bei einer weiteren vorteilhaften Ausgestaltung umfasst die Ausformung mehrere Finger, wobei die Enden der Finger auf einer gedachten, mathematischen Linie oder Oberfläche liegen, die der Form eines rotierenden Teils oder mehrerer rotierender Teile des Getriebes folgt. Durch die Ausgestaltung der Ausformung als Finger, die vorzugsweise quer zu ihrer Längsrichtung einen runden Querschnitt aufweisen, wird gegenüber der Ausgestaltung als Rippen vorteilhaft erreicht, dass strömendes oder spritzendes oder geschleudertes Öl aus mehr als einer Richtung aufnehmbar ist. Somit ist der Wärmeübergang vom Öl an das Kühlmodul weiter verbessert, insbesondere wenn das Getriebe in einer weniger günstigen Lage eingesetzt wird, in der die Ölströmung lagebedingt nicht entlang der Rippenverlaufsrichtung erfolgt. Der Abstand der Finger untereinander ist vorteilhaft gemäß der Viskosität des Schmieröls so wählbar, dass ein Strömen des Öls in den Zwischenräumen zwischen den Rippen mit geringem Strömungswiderstand erfolgt.

Bei einer weiteren vorteilhaften Ausgestaltung sind die Rippen und/oder Finger hohl ausgebildet zur Aufnahme eines Kühlmittels, insbesondere Wasser. Von Vorteil ist dabei, dass durch Aufsetzen eines geeignet geformten Deckels die Rippen Kanäle ausbilden, in denen ein Kühlmittel, beispielsweise Wasser, besonders nahe am Ölstrom fließt und somit der Wärmeabtransport an die Umgebung weiter verbessert ist.

Bei einer weiteren vorteilhaften Ausgestaltung folgt die Ausformung der Form eines rotierenden Teils des Getriebes auf mindestens einer gedachten kreisbogenförmigen Linie, wobei insbesondere der Radius des Kreisbogens durch den Radius des rotierenden Teils bestimmt ist, und/oder die Ausformung sich in Bereiche neben den Seitenflächen von Zahnrädern des Getriebes erstreckt. Somit ist vorteilhaft ein besonders wirkungsvolles Aufnehmen der Ölstroms und eine besonders gute Ausnutzung des Getriebeinnenraums erreichbar.

Bei einer weiteren vorteilhaften Ausgestaltung ist das Kühlmodul aus Aluminium oder Stahl oder Kupfer oder einer metallischen Legierung hergestellt, insbesondere im Druckguss- oder Sandgussverfahren, und/oder es ist vorgesehen, dass die Ausformung mit dem Kühlmodul stoffschlüssig, insbesondere durch Kleben oder Schweißen, verbunden ist. Somit ist vorteilhaft eine kostengünstige, unaufwendige Fertigung des Kühlmoduls erreichbar.

Bei einer weiteren vorteilhaften Ausgestaltung orientiert sich die Gestalt der Querschnittsfläche der Finger, also der Schnittfläche quer zu Längsrichtung der Finger, an der Symmetrie der Anordnung der Finger auf dem Kühlmodul, wobei die Finger insbesondere durch ein spanendes Verfahren, insbesondere Fräsen, hergestellt sind. Somit ist vorteilhaft eine kostengünstige, einfache Fertigung der Rippen mit wenig Aufwand erreichbar. Es sind vorteilhaft je nach Symmetrietyp, also der Zähligkeit der diskreten Drehsymmetrie, die bei idealisierter, hypothetischer unendlicher Ausdehnung das Anordnungsgitter für die Finger in sich selbst überfährt, dreieckige, viereckige oder vieleckige Querschnitte vorsehbar.

Vorzugsweise erstreckt sich die Ausformung entlang einer gedachten Ebene, die transversal, insbesondere rechtwinklig, zu einer Wellenachse des Getriebes, insbesondere einer Wellenachse des rotierenden Teils, verläuft. Von Vorteil ist dabei, dass die Strömung des von dem rotierenden Teil weggeschleuderten Öls nicht wesentlich behindert wird und dass gleichzeitig eine große Oberfläche zum Wärmeübergang von strömendem Öl auf das Kühlmodul bereitgestellt wird.

Bei einer weiteren vorteilhaften Ausgestaltung ist das Kühlmodul für ein Getriebe als Deckel zum Verschließen einer Öffnung des Getriebegehäuses auf das Getriebegehäuse aufsetzbar, wobei das Kühlmodul als Gussteil ausgeführt ist und auf seiner Außenseite eine Nut aufweist. Besonders vorteilhaft ist das Kühlmodul zum Verschließen der Montageöffnung vorsehbar, durch die bei der Getriebemontage die Verzahnteile ins Innere des Getriebes einbringbar sind. Das Gussteil weist Anschlussvorrichtungen für einen Kühlkreislauf auf, und die Enden der Nut sind mit den Anschlussvorrichtungen verbunden. Die Nut ist vorteilhaft mäandrierend ausführbar. Somit ist ein externer Kühlkreislauf für Wasser oder ein anderes Kühlmittel vorsehbar, der sicher trennbar ist vom Getriebeinnenraum. Die sichere Trennung beruht darauf, dass der Abschluss des Kühlkreislaufs nach außen mit Mitteln erfolgt, die verschieden und räumlich getrennt sind von den Mitteln zum Abschluss des Getriebeinnenraums. Dies ist besonders vorteilhaft, da das Eintreten von Wasser in den Getriebeinnenraum und ein Vermischen mit Öl unbedingt zu vermeiden ist.

Vorzugsweise ist die Anschlussvorrichtungen für einen Kühlkreislauf mit dem Gussteil einstückig ausgeführt sind. Die Anschlussvorrichtungen sind somit besonders vorzugsweise als Anschlussstutzen oder als Bohrungen in einem Anschlusskörper ausgebildet. Hierdurch ist eine besonders einfache Fertigung ermöglicht, und ein Kühlkreislauf ist einfach und schnell anschließbar. Die Gefahr von Leckagen ist zudem verhindert oder zumindest vermindert.

Vorzugsweise verlaufen die Anschlussvorrichtungen in etwa tangential zur Oberfläche des Getriebegehäuses im Bereich der Öffnung. Von Vorteil ist bei der tangentialen Anordnung der Anschlussvorrichtungen, dass diese in der montierten Position des Kühlmoduls keine zusätzlich überstehenden Bauteile darstellen und von dem Kühlmodul geschützt werden. Somit ist die Gefahr einer Beschädigung des Kühlkreislaufs vermindert. Die Anschlussvorrichtungen sind besonders vorzugsweise so angeordnet, dass sie im Vergleich zu den baulichen Abmaßen des Kühlmoduls über der Öffnung des Getriebegehäuses keine zusätzliche Erhebung darstellen. Die Anschlussvorrichtungen umfassen ganz besonders vorzugsweise röhrenförmige Anschlussstücke, in welche oder auf welche die Kühlleitungen eines Kühlkreislaufs steckbar sind, und die Achsen dieser röhrenförmigen Anschlussstücke folgen in der Umgebung der Öffnung des Getriebegehäuses, die das Kühlmodul verschließt, in etwa tangential der Außenfläche des Getriebegehäuses. Von Vorteil ist dabei, dass eine seitlich angeordnete Anschlussmöglichkeit für Kühlleitungen geschaffen ist, die durch ihre Anordnung vor Beschädigungen geschützt ist.

Vorzugsweise ist eine Anschlussvorrichtung für die Zuleitung und eine Anschlussvorrichtung für den Abfluss des Kühlkreislaufs vorgesehen. Beide Anschlussvorrichtungen sind in einer vorteilhaften Ausgestaltung an derselben Seite des Kühlmoduls angeordnet. Von Vorteil ist dabei, dass nur eine Seite, besonders vorzugsweise nur eine Stelle besonders vor Leckage durch Beschädigungen zu schützen ist.

Bei einer alternativen Ausgestaltung sind die Anschlussvorrichtungen an gegenüberliegenden Seiten oder an benachbarten Seiten angebracht. Von Vorteil ist dabei, dass weitere Möglichkeiten für die Verlegung der Kühlleitungen am Gehäuse bereitgestellt sind. Somit ist die Führung der Kühlleitungen flexibler gestaltbar.

Bei einer vorteilhaften Ausgestaltung ist das Kühlmodul auf eine Gehäuseflanschfläche der Öffnung des Kühlmoduls aufsetzbar, wobei die Modulflanschfläche und die Gehäuseflanschfläche dieselbe Gestalt aufweisen, insbesondere identisch ausgebildet sind. Von Vorteil ist dabei, dass der Deckel zum Verschließen der Öffnung des Getriebegehäuses wiederverwendbar ist zur Abdeckung des Kühlmoduls und insbesondere der Nuten im Kühlmodul. Somit wird auf einfache Weise und mit geringem Teileaufwand durch das Aufsetzen des Deckels ein Kühlmittelkanal gebildet.

Bei einer weiteren vorteilhaften Ausgestaltung weist der Boden der Nut Erhebungen, insbesondere kissenförmige und/oder wellenförmige und/oder in regelmäßigen Abständen angeordnete Erhebungen, auf. Die Erhebungen bewirken eine Veränderung der Nuttiefe in Nutverlaufsrichtung, also längs der Nut. Von Vorteil ist dabei, dass durch die Erhebungen ein turbulentes Strömen des Kühlmittels selbst bei verhältnismäßig geringen Strömungsgeschwindigkeiten, bei denen das Kühlmittel insbesondere ohne Erhebungen laminar fließen würde, erzwungen wird. Infolgedessen weist der Kühlmittelstrom eine gleichförmigere Temperaturverteilung auf, als dies bei laminarer Strömung der Fall wäre. Somit ist bei gleicher Kühlmittel-Durchsatzmenge ein verbesserter Wärmeabtransport erreichbar. Dies spart Kühlmittel und Energie und folglich Kosten.

Bei einer weiteren vorteilhaften Ausgestaltung umfasst das Getriebegehäuse eine Gehäuse-Schnittstelle zum Verschließen einer Öffnung mit einem Deckel, wobei das Kühlmodul auf seiner dem Getriebe abgewandten Seite eine äußere Verbindungs-Schnittstelle aufweist, wobei die äußere Verbindungs-Schnittstelle und die Gehäuse-Schnittstelle gleichartig, insbesondere identisch, ausgeführt sind, insbesondere dieselbe Gestalt aufweisen. Durch die Ausbildung und Verwendung von Schnittstellen zum mechanischen Verbinden lassen sich eine Vielzahl von Kühlvorrichtungen aus einer geringen Zahl von Einzelteilen zusammensetzen. Dies spart vorteilhaft Lagerhaltungs- und Konstruktionskosten. Unter Schnittstelle wird hier allgemein eine Liste von Merkmalen und/oder Mitteln verstanden, die einander entsprechend an zwei Teilen und/oder zwischen zwei Teilen vorgesehen sind, um zu bewirken, dass ein Zusammenfügen und/oder Verbinden dieser Teile auf definierte Weise erfolgt.

Bei einer weiteren vorteilhaften Ausgestaltung umfasst die Gehäuse-Schnittstelle und die äußere Verbindungs-Schnittstelle jeweils Dichtungsmittel. Somit wird vorteilhaft die Funktion des dichten Verbindens in die Verbindungs-Schnittstelle integriert. Die Dichtungsmittel haben hierbei die Aufgabe, das Innere des Getriebegehäuses gegen Staub, Schmutz und Wasser und gegebenenfalls Luft abzudichten, die Umgebung des Getriebes vor Öl abzuschirmen und gegebenenfalls das Austreten von Kühlmittel zu verhindern, insbesondere das Vermischen von Kühlmittel mit Öl im Getriebegehäuseinneren. Diese Dichtmittel sind vorzugsweise als O-Ringe oder Elastomertlächen oder Klebeverbindungen ausgebildet.

Bei einer weiteren vorteilhaften Ausgestaltung weist das Kühlmodul auf seiner dem Getriebe zugewandten Seite eine innere Verbindungs-Schnittstelle auf, wobei die innere Verbindungs-Schnittstelle und die äußere Verbindungs-Schnittstelle gleichartig, insbesondere identisch, ausgeführt sind, insbesondere dieselbe Gestalt aufweisen. Somit lassen sich vorteilhaft Bearbeitungsschritte bei der Fertigung der Kühlmodule vereinfachen.

Bei einer weiteren vorteilhaften Ausgestaltung ist das Kühlmodul aus Aluminium oder Stahl oder einer metallischen Legierung, beispielsweise nichtrostender Stahl, gefertigt, insbesondere im Druckguss- oder Sandgussverfahren und/oder ist die Ausformung mit dem Kühlmodul stoffschlüssig, insbesondere durch Kleben oder Schweißen, verbunden. Von Vorteil ist dabei, dass Materialien verwendet werden, mit denen eine Fertigung einfach und kostengünstig entsprechend den Anforderungen durchführbar ist. Die Anforderungen umfassen insbesondere mechanische Stabilität gegenüber den Belastungen, denen das Getriebe beim Betrieb ausgesetzt ist, Gewicht, thermische Belastbarkeit bei Temperaturen von 100°C und höher und chemische Beständigkeit gegenüber dem Kühlmittel.

Merkmale der Erfindung bei dem Getriebe mit Kühlvorrichtung sind, dass das Getriebegehäuse eine Öffnung aufweist, die mit einem Deckel verschließbar ist, wobei die Kühlvorrichtung ein Kühlmodul umfasst, und wobei das Kühlmodul räumlich zwischen dem Gehäuse und dem Deckel angeordnet ist und die Öffnung verschließt. Von Vorteil ist dabei, dass eine Kühlvorrichtung bei einem Getriebe einfach, flexibel und kostengünstig nachrüstbar ist, wobei insbesondere der Deckel der Öffnung an der die Kühlvorrichtung angebracht wird, an der Kühlvorrichtung wiederverwendet wird. Das spart Kosten bei der Nachrüstung. Insbesondere ist vorteilhaft ein separater Bereich am Getriebegehäuse zum Anbau einer Kühlvorrichtung verzichtbar, da eine mit einem Deckel verschließbare Öffnung ohnehin, beispielsweise zu Montage- oder Wartungszwecken, am Getriebegehäuse vorgesehen ist und erfindungsgemäß verwendbar ist.

Merkmale der Erfindung bei dem Baukasten für Gätriebekühlvorrichtungen sind, dass der Baukasten Module und Deckel umfasst, die jeweils auf eine Gehäuse-Schnittstelle eines Getriebegehäuses zum Verschließen einer Öffnung aufsetzbar sind, wobei insbesondere die Module und Deckel eine innere Verbindungs-Schnittstelle aufweisen, die auf die Gehäuse-Schnittstelle der Öffnung des Getriebegehäuses passt, und die Module eine äußere Verbindungs-Schnittstelle aufweisen, wobei die äußere Verbindungs-Schnittstelle und die Gehäuse-Schnittstelle gleichartig, insbesondere identisch, ausgeführt sind, insbesondere dieselbe Gestalt aufweisen. Die beschriebene Ausgestaltung der Teile des Baukastens mit zueinander passenden Schnittstellen bewirkt vorteilhaft eine große Kombinationsmöglichkeit und damit eine große Variantenvielfalt von Kühlvorrichtungen bei gleichzeitig geringer Einzelteilezahl. Darüber hinaus ist eine einfache und flexible Nachrüstung eines Getriebes ohne Kühler oder mit unzureichend dimensioniertem Kühler einfach und kostengünstig möglich.

Von Vorteil ist weiterhin, dass eine am Getriebegehäuse ohnehin vorgesehene Öffnung nutzbar ist. Insbesondere sind Getriebegehäuse in monobloc-Bauweise einsetzbar, die also aus einem Guss gefertigt sind, da derartige Gehäuse eine Öffnung zum Einsetzen der Zahnräder oder Verzahnteile ins Innere aufweisen. Die Größe der Öffnung wird wenigstens durch die Größe des größten Verzahnteils bestimmt, das zum Einbau vorgesehen ist.

Bei einer vorteilhaften Ausgestaltung umfasst die äußere und innere Verbindungs-Schnittstelle jeweils mindestens ein Bohrbild und/oder Dichtungsmittel und/oder Ausformungen zum Dichten und/oder Zentriermittel. Von Vorteil ist somit, dass die Verbindung der Schnittstellen mittels Schrauben und/oder Klemmelementen und/oder rastenden Verbindungselementen vorsehbar ist und/oder dass die Verbindung aller für eine Getriebekühlvorrichtung ausgewählten Module und Deckel mit demselben Satz von Befestigungsmitteln, wie beispielsweise Schrauben, Niete oder Klemmelemente, herstellbar ist. Die Verwendung von Schrauben und/oder Klemmelementen bewirkt vorteilhaft eine schnelle Lösbarkeit der Verbindungen. Über die Bohrbilder und/oder die Ausformungen zum Dichten, wie beispielsweise Feder-Nut-Systeme, und/oder die Zentriermittel ist vorteilhaft ein schnelles und fehlerfreies Aufsetzen durchführbar.

Bei einer weiteren vorteilhaften Ausgestaltung sind die äußere und innere Verbindungs-Schnittstelle gleichartig, insbesondere identisch, ausgeführt. Somit ist vorteilhaft die Zahl der verschiedenen Fertigungsschritte reduzierbar. Außerdem ist eine hohe Varianz innerhalb der Baureihe mit geringer Teilezahl erreichbar.

Bei einer weiteren vorteilhaften Ausgestaltung ist mindestens ein Deckel aus Stahl oder einer metallischen Legierung, beispielsweise aus nichtrostendem Stahl, gefertigt und/oder mit einer karrosionsbeständigen und/oder kühlmittelbeständigen Beschichtung versehen. Von Vorteil ist dabei, dass im Baukasten ein kostengünstig fertigbarer Deckel bereitgestellt wird, beispielsweise zur Verwendung am Getriebegehäuse ohne Kühlvorrichtung. Die korrosionsbeständige und/oder kühlmittelbeständige Beschichtung bewirkt zudem vorteilhaft, dass der Deckel mit einem Kühlmittelkreislauf in Kontakt bringbar ist, ohne durch chemische Reaktionen Schaden zu nehmen. Vorteilhaft wird der Deckel mit einem korrosionsschützendem Lack oder einem Elastomer beschichtet.

Bei einer weiteren vorteilhaften Ausgestaltung weist die korrosions- und/oder kühlmittelbeständige Beschichtung Dichtmittel an mindestens einer der Verbindungs-Schnittstellen auf. Von Vorteil ist dabei, dass Beschichtung und Dichtmittel in einem Arbeitsgang aufbringbar sind. Die Dichtmittel umfassen vorteilhaft linien- oder flächenhaft ausgebildete Dichtungen und/oder Feder-Nut-Systeme.

Bei einer weiteren vorteilhaften Ausgestaltung weist mindestens ein Modul an seiner nach außen gerichteten Seite eine Nut auf, wobei insbesondere Mittel zum Anschließen der Nut an einen Kühlkreislauf vorgesehen sind, wobei der Kühlkreislauf im Getriebegehäuse oder außerhalb des Getriebegehäuses angeordnet ist, und wobei das Kühlmittel Öl oder Wasser oder ein anderes Kühlmittel ist. Somit ist die Kühlvorrichtung einfach an einen Kühlkreislauf anschließbar, insbesondere bei Beibehaltung des dichten Abschlusses des Getriebegehäuses. Von Vorteil ist dabei insbesondere, dass bereits im Modul ein Anschluss für den Kühlkreislauf vorsehbar ist, dass also ein abgeänderter Deckel mit derartigen Anschlussvorrichtungen verzichtbar ist.

Bei einer weiteren vorteilhaften Ausgestaltung weist mindestens ein Modul an seiner nach innen gerichteten Seite eine Ausformung auf, die der Form eines rotierenden Teils oder mehrerer rotierender Teile des Getriebes folgt. Von Vorteil ist dabei, dass der Innenraum des Getriebegehäuses zur Kühlung nutzbar ist; und dass von rotierenden Teilen weggeschleudertes oder wegströmendes Öl von der Kühlvorrichtung, insbesondere der Ausformung, aufgefangen wird, wodurch dem Öl Wärme entziehbar ist.

Bei einer weiteren vorteilhaften Ausgestaltung sind die Getriebekohlvorrichtungen bei einer Baureihe von Getrieben einsetzbar, die sich durch Auswahl der vorgesehenen Zahnräder hinsichtlich ihrer jeweiligen Übersetzungszahl unterscheiden. Somit lassen sich die Vorteile eines Baukastens für Getriebekühlvorrichtungen mit den Vorteilen eines Baukastens für Getriebe - bei dem insbesondere Teile des Getriebegehäuses, hier beispielsweise die Gehäuse-Schnittstelle, bei allen Varianten gleich ausgebildet sind, die verwendeten Verzahnteile zur Erreichung unterschiedlicher Übersetzungsstufen und/oder Drehmomentumlenkwinkel sich dagegen unterscheiden - vorteilhaft kombinieren:

Bei einer weiteren vorteilhaften Ausgestaltung weist mindestens ein Deckel an seiner nach außen gerichteten Seite eine Ausformung, insbesondere Rippen und/oder Finger, auf. Somit ist vorteilhaft innerhalb des Baukastens eine Kühlvorrichtung bildbar, die passiv arbeitet, die also insbesondere ohne Kühlmittelkreislauf betreibbar ist. Alternativ ist aber auch eine Luftkühlung vorsehbar, bei der von einem Lüfter angetriebene Luft an der nach außen gerichteten Ausformung vorbeiströmt.

Bei einer weiteren vorteilhaften Ausgestaltung umfasst der Baukasten mindestens ein erfindungsgemäßes Kühlmodul. Von Vorteil ist dabei, dass sich die Vorteile der erfindungsgemäßen Kühlmodule in den Kühlvorrichtungen nutzen lassen, die mit dem Baukasten bildbar sind.

Bei einer weiteren vorteilhaften Ausgestaltung weist mindestens ein Modul auf seiner nach innen gerichteten Seite eine hohle Ausformung auf, und mindestens ein Deckel auf seiner nach innen gerichteten Seite eine dem Hohlprofil entsprechende Ausformung, so dass die Ausformung des Deckels mindestens teilweise in die hohle Ausformung des Moduls passt. Von Vorteil ist dabei, dass mit der hohlen Ausformung des Moduls und der Ausformung des Deckels ein Kanal bildbar ist, durch den Kühlmittel leitbar ist, wodurch das Kühlmittel besonders nahe an die Raumbereiche bringbar ist, in denen das zu kühlende Öl strömt.

Bei einer weiteren vorteilhaften Ausgestaltung umfasst der Baukasten eine Luftleitvorrichtung, mit der Luft von einem Lüfter über die Getriebekühlvorrichtung leitbar ist. Von Vorteil ist dabei, dass ein Lüfter, beispielsweise ein auf einer eintreibenden Welle angeordneter passiver Lüfter, mit Teilen des Baukastens für die Kühlvorrichtung nutzbar ist.

Bei einer weiteren erfindungsgemäßen Ausgestaltung der Baureihe ist mindestens ein passives Kühlmodul mit Rippen und/oder Rippen nach innen und außen einstückig, dass heißt aus einem Guss gefertigt.

Merkmale der Erfindung bei der Baureihe von Getrieben sind, dass die Baureihe Varianten umfasst, die sich durch verschiedene verwendete Zahnräder und/oder Verzahnteile unterscheiden, insbesondere hinsichtlich der Übersetzungszahl, wobei eine Getriebekühlvorrichtung vorgesehen ist, deren Kühlmodul bei einer ersten Variante in der Baureihe der Form eines Verzahnteils folgt, insbesondere im Rahmen der Fertigungstoleranzen und bei einer zweiten Variante in der Baureihe der Form eines Verzahnteils in etwa folgt. Von Vorteil ist dabei, dass die Teilevielfalt im die Baureihe von Getrieben definierenden Baukasten reduzierbar ist, da Kühlmodule, die für eine Variante der Baureihe konstruiert sind, deren bauliche Abmaße, insbesondere bezüglich der ins Getriebeinnere ragenden Rippen oder Finger, bei anderen Varianten, bei denen sie nicht optimal passen, vorsehbar sind, da auch für diese somit erhebliche Kühleffekte bewirkbar sind, obwohl die Ausformungen der Form rotierender Teile bei diesen anderen Varianten aufgrund der andersartigen Verzahnteile nur ungefähr und mit Abweichungen folgen. Unter einem Getriebe der Baureihe wird allgemein eine Vorrichtung zum Umlenken oder Übersetzen von Drehmomenten verstanden. In einem Getriebe sind Zahnräder angeordnet, wobei miteinander kämmende Zahnräder eine Getriebestufe bilden. Die verwendeten Getriebestufen ergeben die Gesamtübersetzungszahl. Die für die Getriebestufen zu einer Übersetzungszahl vorgesehenen Zahnräder werden insgesamt als Zahnradsatz bezeichnet. Die Baureihe von Getrieben zeichnet sich vorteilhaft dadurch aus, dass für ein Getriebegehäuse verschiedene Zahnradsätze zur Bildung von Getriebevarianten mit unterschiedlichen Übersetzungszahlen vorsehbar sind. Die Baureihe ist vorteilhaft so ausgebildet, dass die Teile der Kühlvorrichtung zu verschiedenen Zahnradsätzen passen, wobei ein Kühlmodul der Form eines Zahnradsatzes besser folgt als der Form eines weiteren Zahnradsatzes.

Weitere Vorteile ergeben sich aus den Unteransprüchen.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

### Bezugszeichenliste

- 1: erstes Kühlmodul
- 2: Modulplatte
- 3: Fangrippe
- 4, 5, 6: kreisförmige Einwölbung
- 7, 8: Kreisschnittpunkt
- 9: Kühlmittelnut
- 10: Anschlussöffnung
- 11: Nutende
- 12: Nutbodenerhebung
- 14: Auffangbereich
- 17: Durchlass
- 19: zweites Kühlmodul
- 20: Fangfinger
- 21: Auffangbereich
- 22, 23: Kreisschnittpunkt
- 29: drittes Kühlmodul
- 30: Modulunterteil
- 31: Moduloberteil
- 32: Hohlrippe
- 33: Vollrippe
- 34: Kühlmittelkanal
- 35: Durchlass
- 36: Anschlussöffnung
- 40: Getriebe
- 41: Getriebegehäuse
- 42: eintreibende Welle
- 43: Abdeckung
- 45, 46: Zahnrad
- 47: Öffnung
- 49: Gehäusedeckel
- 51: Gehäuseflanschfläche
- 52: Schraube
- 53: Modulflanschfläche
- 55: Anschlusskupplung
- 57: Gewindebohrung
- 60: passives Kühlmodul
- 62: Kühlrippe
- 70: erster Moduldeckel
- 80: Ölmodul
- 82: Kühlmittelmodul
- 84: zweiter Moduldeckel
- 86: Blindstopfen
- 88: Anschlussstück
- 89: Kühlfinger
- 90: Eintriebsseite
- 91: Lüfter
- 92: Luftleitvorrichtung
- 95: Rohr
- 100: Ölkanal
- 102: Kühlmittelkanal
- 110, 111: Kontaktfläche

Die Erfindung wird nun anhand von Abbildungen näher erläutert:

Es zeigt
Figur 1a ein erfindungsgemäßes Ausführungsbeispiel eines Kühlmoduls,
Figur 1b das Ausführungsbeispiel von Fig. 1a, von unten gesehen,
Figur 1c einen Längsschnitt durch das Ausführungsbeispiel von Fig. 1a,
Figur 1d einen Querschnitt durch das Ausführungsbeispiel von Fig. 1a,
Figur 2a ein zweites erfindungsgemäßes Ausführungsbeispiel eines Kühlmoduls,
Figur 2b das Ausführungsbeispiel von Fig. 2a, von unten gesehen,
Figur 2c einen Längsschnitt durch das Ausführungsbeispiel von Fig. 2a,
Figur 3a einen Querschnitt und Fig. 3b einen Längsschnitt durch ein drittes erfindungsgemäßes Ausführungsbeispiel eines Kühlmoduls;
Figur 4a die erfindungsgemäße Verwendung an einem Getriebe eines Kühlmoduls aus dem erfindungsgemäßen Baukasten,
Figur 4b die erfindungsgemäße Verwendung eines weiteren Kühlmoduls aus dem erfindungsgemäßen Baukasten,
Figur 4c die erfindungsgemäße Verwendung eines weiteren Kühlmoduls aus dem erfindungsgemäßen Baukasten,
Figur 4d die erfindungsgemäße Verwendung eines weiteren Kühlmoduls aus dem erfindungsgemäßen Baukasten,
Figur 5a das Getriebe mit Kühlmodul aus Figur 4d in zusammengebauter Form,
Figur 5b einen Längsschnitt durch das Getriebe mit Kühlmodul aus Figur 5a,
Figur 6 eine Seitenansicht und einen Querschnitt des Kühlmoduls aus Figur 4b in zusammengebauter Form,
Figur 7 einen Querschnitt des Kühlmoduls aus Figur 4c in zusammengebauter Form.

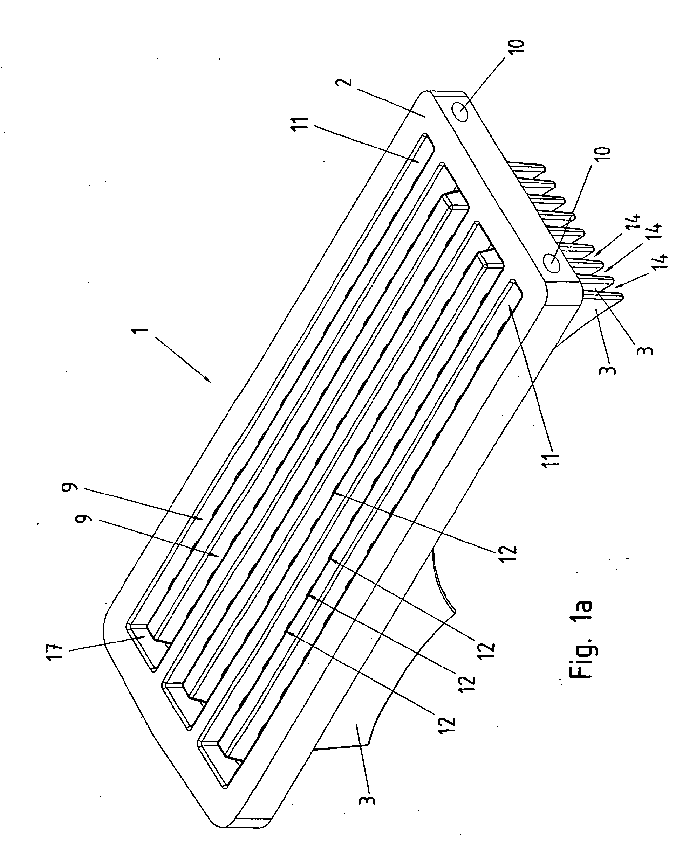

Figur 1a zeigt ein erfindungsgemäßes Ausführungsbeispiel eines ersten Kühlmoduls. Das erste Kühlmodul 1 besteht aus einer Modulplatte 2, an deren Unterseite eine Ausformung vorgesehen ist, die als eine Mehrzahl parallel verlaufender Fangrippen 3 ausgebildet ist.

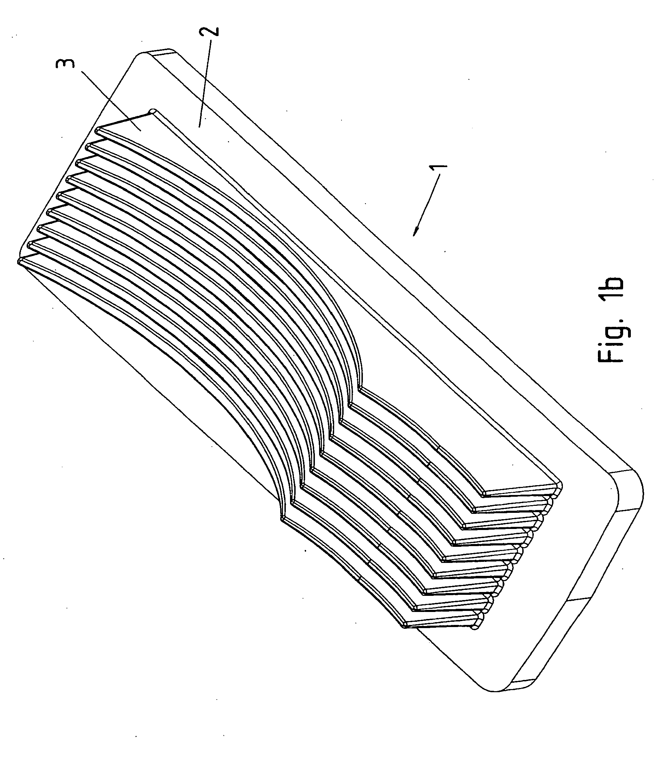

In Figur 1b ist das erste Kühlmodul von unten abgebildet. Die parallel verlaufenden Fangrippen 3 weisen eine sich von der Modulplatte 2 weg verjüngende Dicke auf. Die Fangrippen 3 sind zueinander kongruent ausgeführt und werden mit dem Moduldeckel 2 aus einem Guss, insbesondere durch Sandguss oder Druckguss, in Aluminium gefertigt.

In einem anderen erfindungsgemäßen Ausführungsbeispiel sind die Fangrippen 3 aus Aluminium-Flachmaterial separat gefertigt und anschließend durch Schweißen mit der ebenfalls aus Aluminium gefertigten Modulplatte 2 verbunden.

In einem weiteren erfindungsgemäßen Ausführungsbeispiel sind die Fangrippen 3 und die Modulplatte 2 aus einer metallischen Legierung gefertigt, beispielsweise aus Stahl oder aus Kupfer oder aus Legierungen von beiden.

In die in Figur 1a gezeigte Oberseite der Modulplatte 2 ist eine mäandrierende Kühlmittelnut 9 eingebracht. Der Boden dieser Kühlmittelnut 9 weist Nutbodenerhebungen 12 auf.

An einer kurzen Seite der Modulplatte 2 sind zwei Anschlussöffnungen 10 vorgesehen, die jeweils in ein Nutende 11 der Kühlmittelnut 9 münden.

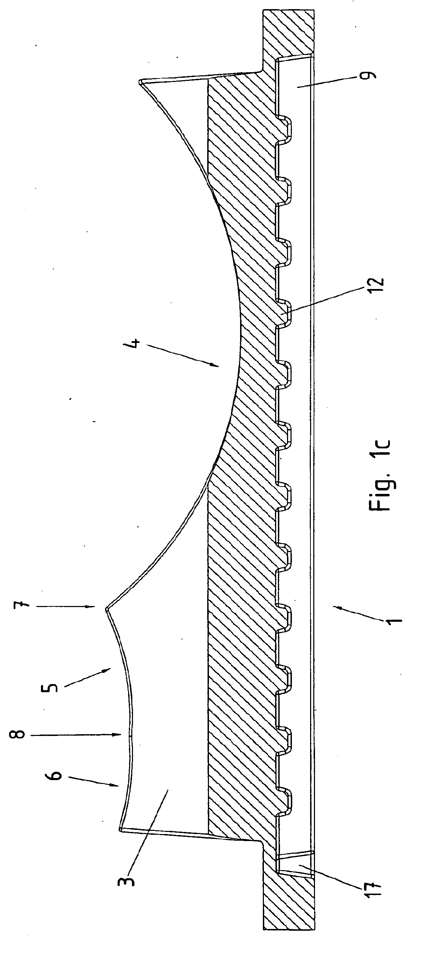

Figur 1c zeigt einen Längsschnitt durch das erste Kühlmodul 1. Die Schnittebene schneidet die Seitenfläche einer Fangrippe 3 ungefähr in mittlerer Höhe. Die Fangrippe 3 weist drei kreisförmige Einwölbungen 4, 5 und 6 auf, die durch die Kreisschnittpunkte 7 und 8 voneinander getrennt werden. Die Radien der kreisförmigen Einwölbungen 4, 5 und 6 und die Tiefe ihres Einwölbens in die Fangrippe 3 werden durch die baulichen und geometrischen Verhältnisse am Verwendungsort des ersten Kühlmoduls an einem Getriebe, insbesondere durch den Radius und die Position der Zahnräder des Getriebes, bestimmt. Die gezeigte dreiteilige Ausbildung bewirkt vorteilhaft, dass das Kühlmodul für unterschiedliche Zahnradsätze im gleichen Getriebegehäuse einsetzbar ist.

In anderen Ausführungsformen sind zwei oder weniger oder mehr als drei kreisförmige Auswölbungen vorgesehen, die durch Kreisschnittpunkte unterteilt werden.

In anderen Ausführungsformen sind an den Fangrippen 3 von der Modulplatte 2 weg verlaufende schlitzförmige Unterbrechungen ausgeführt.

Figur 1c zeigt darüber hinaus einen Abschnitt der Kühlmittelnut 9 mit den Nutbodenerhebungen 12. Diese Nutbodenerhebungen 12 sind als abgerundete Stufen kissenförmig ausgeführt, wobei die Stufen in gleichmäßigen Abständen auf dem Nutboden angeordnet sind.

In anderen Ausführungsbeispielen ist der Nutboden wellenförmig ausgebildet, und/oder die Erhebungen sind in regelmäßigen oder unregelmäßigen Abständen angeordnet, oder der Nutboden ist eben und also ohne Erhebungen ausgeführt.

Die Nutbodenerhebungen bewirken, dass eine in der Kühlmittelnut 9 fließende Flüssigkeit, etwa ein Kühlmittel, ein turbulentes Strömungsverhalten annimmt, und somit eine gute Durchmischung insbesondere hinsichtlich der Temperaturverteilung in der Flüssigkeit aufweist.

Ein Durchlass 17 verbindet den in Figur 1c gezeigten Abschnitt der Kühlmittelnut 9 mit dem benachbarten Abschnitt der Kühlmittelnut 9.

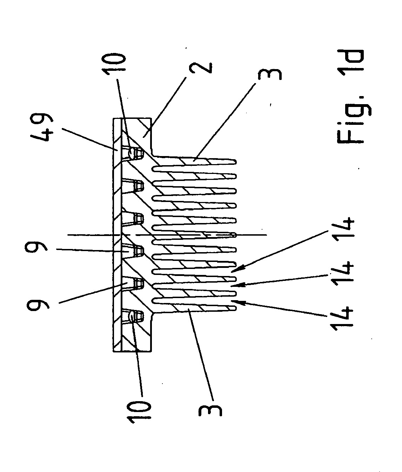

Figur 1d zeigt einen Querschnitt durch das erste Kühlmodul 1, auf dem ein Getriebedeckel 49 montiert ist. Durch das Aufsetzen des Getriebedeckels bildet die Kühlmittelnut 9 einen abgeschlossenen mäanderförmigen Kanal, durch den Kühlmittel fließen kann, und der nach außen nur über die Anschlussöffnungen 10 verbunden ist.

Die Fangrippen 3 begrenzen Auffangräume 14, durch die bei erfindungsgemäßer Verwendung des Kühlmoduls an einem Getriebe von den Getriebestufen oder den Zahnrädern weggeschleudertes Öl aufnehmbar ist. Der Abstand der Fangrippen untereinander ist vorteilhaft so gewählt, dass die durch die Fangrippen 3 gebildeten Auffangräume 14 jeweils einen Querschnitt aufweisen, der ungefähr so groß ist wie der Querschnitt einer Fangrippe 3. Die Neigung der Seitenflächen der Fangrippen 3 gegenüber der Modulplatte 2, die Dicke der Fangrippen und der Abstand zwischen den Fangrippen werden vorteilhaft gemäß der Vorgaben des Fertigungsverfahren, wie beispielsweise Sandguss oder Duckguss, gewählt.

Bei weiteren erfindungsgemäßen Ausgestaltungen ist der Abstand der Rippen zueinander kleiner oder größer als die Dicke der Fangrippen.

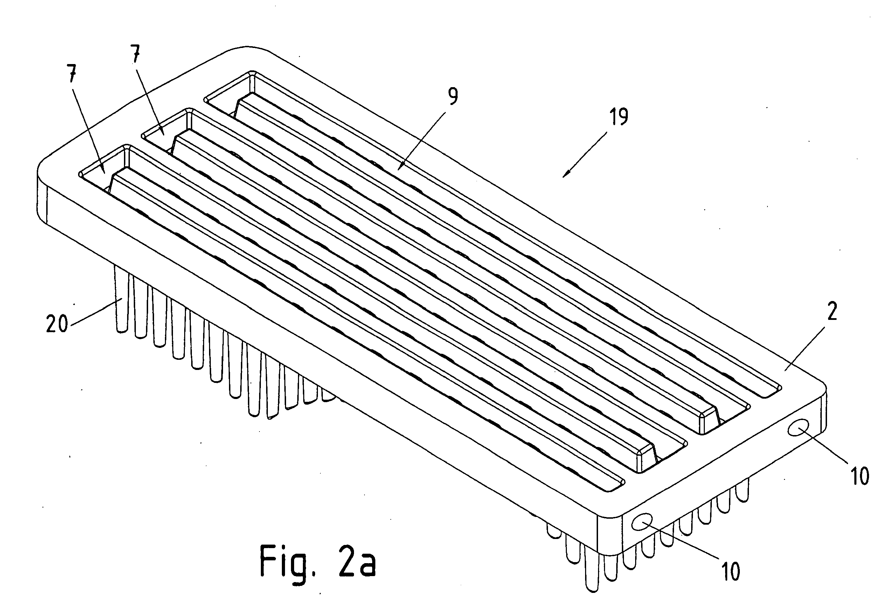

Figur 2a zeigt ein weiteres erfindungsgemäßes Ausführungsbeispiel eines zweiten Kühlmoduls. Das zweite Kühlmodul 19 besteht aus einer Modulplatte 2, die an ihrer Unterseite eine Ausformung in Form von Fangfingern 20 aufweisen.

Die Modulplatte 2 weist eine Kühlmittelnut 9 und Anschlussöffnungen 10 auf und ist baugleich mit der Modulplatte von Figur 1a bis 1d. Somit ist eine günstige Fertigung von Kühlmodulen in verschiedenen Varianten, mit Fangrippen und/oder mit Fangfingem, ermöglicht.

Das zweite Kühlmodul 19 wird im Aluminiumgussverfahren hergestellt.

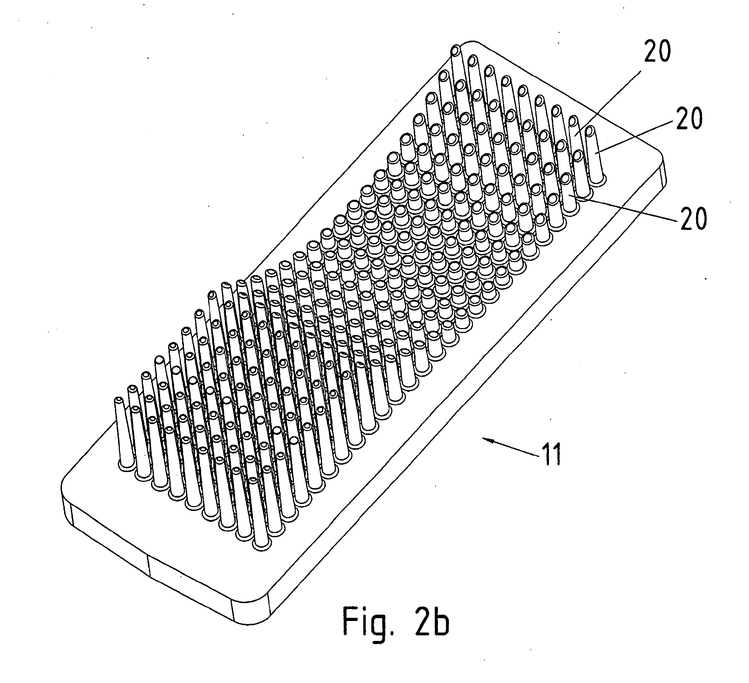

Figur 2b zeigt die Unterseite des zweiten Kühlmoduls 19. Die Fangfinger 20 sind in parallelen Längs- und Querreihen angeordnet, so dass durchgehende, parallel verlaufende Gassen in mindestens zwei Richtungen gebildet werden.

In anderen Ausführungsbeispielen sind die Fangfinger nach anderen regelmäßigen oder unregelmäßigen Mustern angeordnet.

Die Fangfinger 20 begrenzen Auffangbereiche 21, durch die bei erfindungsgemäßer Verwendung des zweiten Kühlmoduls an einem Getriebe von dessen Getriebestufen oder dessen Zahnräder in verschiedene, insbesondere schräg oder senkrecht zueinander verlaufende Richtungen weggeschleudertes Öl aufnehmbar ist. Dies ist vorteilhaft gegenüber dem Ausführungsbeispiel nach Figur 1a, in welchem die Auffangbereiche 14 eine einzige Richtung auszeichnen.

Die Fangfinger 20 weisen einen runden Querschnitt in Bezug auf ihre Länge auf, und sie verlaufen auf ihr Ende hin verjüngt.

In anderen Ausführungsbeispielen weisen die Fangfinger im Querschnitt die Gestalt eines Vielecks, insbesondere eines Drei- oder Vierecks, auf. Die Gestalt der Querschnittsfläche orientiert sich dabei vorteilhaft an der Symmetrie der Anordnung der Fangfinger auf der Modulplatte. Somit sind die Fangfinger gemeinsam mit der Modulplatte mit einfachen unaufwendigen Trennverfahren aus einem Block fertigbar.

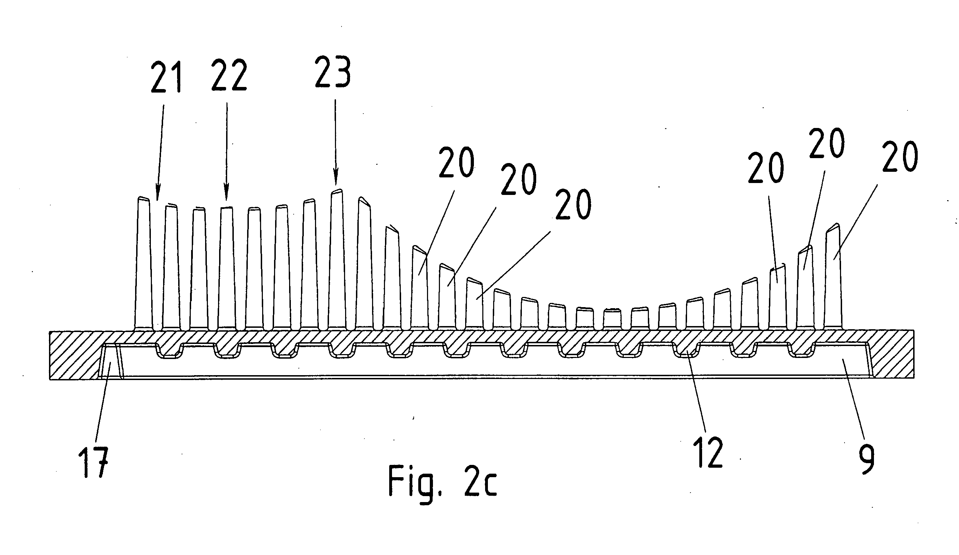

Figur 2c zeigt einen Längsschnitt durch das in Figur 2a gezeigte zweite Kühlmodul. Die Enden der Fangfinger 20 bilden in Längsrichtung des zweiten Kühlmoduls 19 eine Einhüllende, die drei kreisförmige Einwölbungen beschreibt. Diese kreisförmigen Einwölbungen gehen an gedanklichen Kreisschnittpunkten 22, 23 ineinander über. Die Radien der kreisförmigen Einwölbungen und die Tiefe ihres Einwölbens in die von den Fangfingern aufgespannte Ebene werden durch die baulichen und geometrischen Verhältnisse am Verwendungsort des zweiten Kühlmoduls an einem Getriebe, insbesondere durch den Radius und die Position der drehenden Teile, wie Zahnräder, Zykloscheiben, Exzenterscheiben oder dergleichen, des Getriebes, bestimmt.

In anderen Ausführungsformen sind zwei oder weniger oder mehr als drei kreisförmige Auswölbungen vorgesehen, die durch Kreisschnittpunkte unterteilt werden.

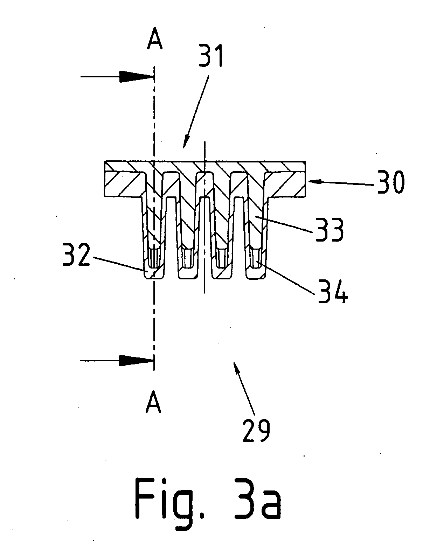

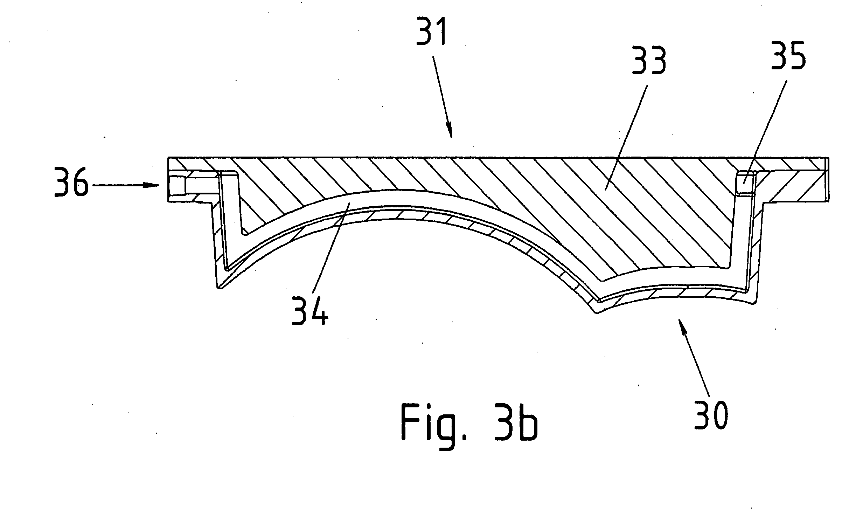

Figur 3a zeigt einen Querschnitt und Figur 3b einen Längsschnitt entlang der Schnittfläche A-A durch ein weiteres erfindungsgemäßes Ausführungsbeispiel eines dritten Kühlmoduls.

Das dritte Kühlmodul 29 besteht aus einem Modulunterteil 30 und einem Moduloberteil 31. Das Modulunterteil 30 umfasst eine Platte und zueinander parallel verlaufende Hohlrippen 32, in denen entsprechende Vollrippen 33 des Modüloberteils 31 angeordnet sind, wenn das Moduloberteil 31 auf dem Modulunterteil 30 in der gezeigten Weise aufgesetzt ist.

Das Längsprofil der Hohlrippen 32 nach Figur 3b beschreibt eine Einhüllende, die derjenigen der Fangrippen des ersten Kühlmoduls 1 aus Figur 1c gleicht.

Die Hohlrippen 32 und die Vollrippen 33 bilden in zusammengesetzter Position, wie in Figur 3b gezeigt, jeweils einen Kühlmittelkanal 34. Diese Kühlmittelkanäle 34 sind über Durchlässe 35 so verbunden, dass insgesamt ein in zwei Richtungen mäandrierender Kühlmittelkanal gebildet wird. Die Enden des mäandrierenden Kühlmittelkanals münden über zwei Anschlussöffnungen 36 nach außen.

Weitere erfindungsgemäße Ausführungsbeispiele eines Kühlmoduls ergeben sich aus den Beschreibungen der Verwendung der Kühlmodule und aus den Kombinationsmöglichkeiten der weiter unten beschriebenen Baureihe.

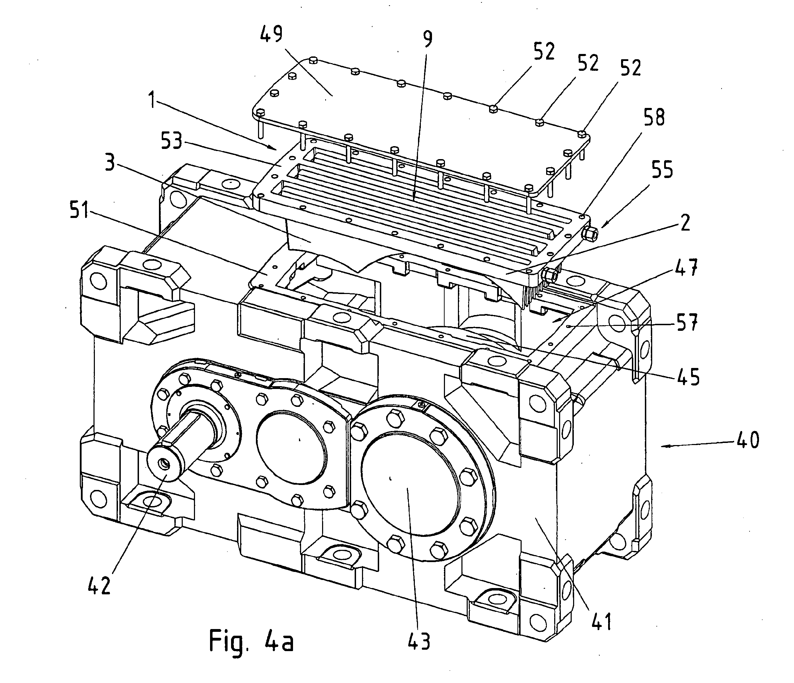

Figur 4a zeigt eine erfindungsgemäße Verwendung eines ersten Kühlmoduls nach Figur 1 a bis 1 in einem Getriebe 40, das ein Gehäuse 41 in monobloc-Bauweise, also aus einem Guss gefertigt, mit einer Öffnung 47 umfasst. In dem Gehäuse 41 sind Zahnräder 45 auf Wellen angeordnet. Diese Zahnräder 45 sind über die Öffnung 47 zum Zwecke der Montage, der Kontrolle, der Wartung oder eines Ölaustauschs zugänglich. Insbesondere ist die Öffnung also derart dimensioniert, dass das größte vorgesehene Zahnrad oder Verzahnteil durch sie hindurchführbar ist. Somit bestimmt das Getriebe, bei dem das Kühlmodul 1 eingesetzt wird, vorteilhaft die baulichen Abmaße des Deckels 47 und somit des Kühlmoduls 1. Die Länge des Deckels beträgt im hier beschriebenen Ausführungsbeispiel ungefähr 30 cm. Bei anderen Ausführungsbeispielen liegt diese Länge zwischen 5 cm und 2 m.

In Figur 4a ist weiter eine Welle als eintreibende Welle 42 über einem Lager im Gehäuse 41 gelagert, eine Abdeckung 43 bedeckt das Ende der abtreibenden Welle des Getriebes, die auf der nicht gezeigten Rückseite aus dem Gehäuse 41 herausgeführt ist.

In einer ersten Variante ist die Öffnung 47 verschließbar mit einem Gehäusedeckel 49, der über Schrauben 52 befestigt wird, die in Gewindebohrungen 57 eingeschraubt werden. Der Gehäusedeckel 49 liegt in befestigter Position eben auf der Gehäuseflanschfläche 51 auf. Dabei sind nicht gezeigte Dichtungsmittel zwischen Gehäuseflanschfläche 51 und Gehäusedeckel 49 vorgesehen, die den Innenraum des Gehäuses 41 nach innen und außen abdichten, so dass kein Öl austreten kann und keine Verunreinigungen von außen in das Öl gelangen können. Vorteilhaft wird die Dichtung mittels eines Metallklebstoffs, beispielsweise Loctite, der auf die Flanschflächen aufgetragen wird, bewirkt.

Bei anderen Ausführungsbeispielen wird die Dichtung durch einen auf der Flanschfläche umlaufenden O-Ring oder eine Papierdichtung bewirkt. Eine derartige Dichtung ist durch ein an den Flanschflächen vorgesehenes Feder-Nut-System verbesserbar.

In einer zweiten Variante ist - wie beispielhaft in Figur 4a gezeigt - zur Verbesserung der Kühlung des Getriebes 40 erfindungsgemäß ein erstes Kühlmodul 1 zwischen Gehäuseflanschfläche 51 und Gehäusedeckel 49 vorsehbar. Dazu wird die Unterseite der Modulplatte 2 des Kühlmoduls 1 auf die Gehäuseflanschfläche 51 aufgesetzt. Die Modulplatte 2 weist Bohrlöcher 58 auf, die in Anordnung und Durchmesser zu den Gewindebohrungen 57 passen. Somit ist der Gehäusedeckel 49 gemeinsam mit dem ersten Kühlmodul 1 über die Schrauben 52 am Getriebegehäuse 41 befestigbar, indem die Schrauben 52 durch die Bohrlöcher 58 gesteckt und in die Gewindebohrungen 57 geschraubt werden. Auf der Oberseite der Modulplatte 2 ist eine Modulflanschfläche 53 vorgesehen, die mit dem Gehäusedeckel 49 einen dichten Abschluss des Innenraums des Getriebegehäuses 41 bildet. Die notwendigen Dichtungsmittel sind der Einfachheit halber nicht gezeigt. Ebenso bildet die Unterseite der Modulplatte 2 mit der Gehäuseflanschfläche 51 einen dichten Abschluss des Innenraums.

Durch das Aufsetzen des Gehäusedeckels 49 wird die Kühlmittelnut 9 in der Modulplatte 2 nach außen derart dicht abgeschlossen, dass Kühlmittel, beispielsweise eine Kühlflüssigkeit wie Wasser oder Öl, in dem so gebildeten Kanal fließen kann, ohne auszutreten. Die dazu erforderlichen Dichtungsmittel sind der Einfachheit halber nicht gezeigt. Sie sind vorzugsweise auf der Oberfläche der Modulplatte 2 vorgesehen, sind aber auch zumindest teilweise an der Unterseite des Gehäusedeckels 49 vorsehbar. An einer Seitenwand des Kühlmoduls sind Anschlussvorrichtungen in Form von zwei Anschlusskupplungen 55 vorgesehen. Diese Anschlusskupplungen 55 verlaufen in montierter Position des Kühlmoduls 1 tangential zur äußeren Oberfläche des Getriebegehäuses 41. Somit sind die Anschlusskupplungen 55 und daran angeschlossene Leitungen durch das Kühlmodul 1 vor Beschädigung geschützt. Durch eine erste Anschlusskupplung 55 fließt Kühlmittel aus einem Kühlmittelkreislauf in die Kühlmittelnut 9 hinein, durch eine zweite Anschlusskupplung 55 fließt Kühlmittel aus der Kühlmittelnut 9 in den Kühlmittelkreislauf zurück.

DerGehäusedeckel 49 ist vorteilhaft aus Aluminium gefertigt. Bei weiteren erfindungsgemäßen Ausführungsbeispielen ist der Gehäusedeckel aus Stahl oder rostfreiem Stahl gefertigt und/oder weist zumindest an seiner der Kühlmittelnut zugewandten Seite eine korrosionsbeständige und/oder kühlmittelbeständige Beschichtung, beispielsweise eine Lackierung oder eine Kunststoffbeschichtung, auf. Bei einem weiteren erfindungsgemäßen Ausführungsbeispiel bewirkt die Kunststoffbeschichtung zusätzlich die Abdichtung der Verbindung von Gehäusedeckel mit Kühlmodul.

Besonders vorteilhaft ist bei der in Figur 4a beschriebenen Anordnung, dass selbst bei einer Leckage der Kühlmittelleitungen oder bei Undichtigkeiten der Abdichtung zwischen Gehäusedeckel 49 und Modulplatte 2 kein Kühlmittel in den Innenraum des Gehäuses 41 gelangen kann.

In montierter Lage ragen die Fangrippen 3 des ersten Kühlmoduls 1 durch die von der Öffnung 47, also insbesondere von der Gehäuseflanschfläche 51 aufgespannte gedachte Begrenzungsfläche des Gehäuseinnenraums hindurch in den Innenraum des Gehäuses 41 hinein.

Das Längsprofil der Fangrippen 3 folgt in montierter Lage des ersten Kühlmoduls 1 der Form der Zahnräder 45, wofür kreisförmige Einwölbungen in den Fangrippen 3 ausgebildet werden. Die Anzahl und die Form dieser kreisförmigen Einwölbungen ist dabei so gewählt. dass einerseits die Zahnräder für die verschiedenen Übersetzungszahlen, mit denen das Gehäuse 41 ausgerüstet werden kann, in ihrer bestimmungsgemäßen Bewegung nicht durch die Fangrippen 3 gehemmt werden, andererseits die Fangrippen 3 möglichst dicht zumindest teilweise dem von den Zahnrädern überstrichenen Bereich folgen, um von den Zahnrädern weggeschleudertes Öl gut aufnehmen zu können. Der Abstand der Fangrippen ist dabei unter besonderer Berücksichtigung der Viskosität des Öls so gewählt, dass die Zahnräder in ihrer bestimmungsgemäßen Bewegung nicht merklich durch zwischen Fangrippen und Zahnrädern befindliches Öl abgebremst werden.

Als vorteilhaft hat sich eine dreiteilige Ausgestaltung der Fangrippen 3 in der abgebildeten Art nach Figur 1c erwiesen, andere Ausführungsformen der Fangrippen 3 sind ebenfalls von der Erfindung umfasst. Beispielsweise ist ein seitliches Hineinragen der Fangrippen 3 in den Bereich des Gehäuseinnenraums links der Öffnung 47 vorsehbar, wodurch insbesondere das Zahnrad auf der eintreibenden Welle 42 besser abgedeckt wird.

Bei einem weiteren Ausführungsbeispiel sind die Kühlrippen ungleich ausgebildet und erstrecken sich teilweise in Bereiche neben Zahnrad 45.

In montierter Lage, wie in Figur 4a verdeutlicht, nimmt das erste Kühlmodul 1 über seine Fangrippen 3 von den Zahnrädern 45 weggeschleudertes Öl auf. Die Fangrippen 3 sind so ausgerichtet, dass sie in den durch sie gebildeten Auffangbereichen 14 möglichst viel Öl aufnehmen und die Seitenflächen der Fangrippen 3 möglichst ganzflächig mit Öl bedeckt werden. Dieses Öl gibt Wärme an die Fangrippen 3 ab, während es zurück in den Ölsumpf des Getriebes 40 fließt. Die von den Fangrippen 3 aufgenommene Wärme wird über die Fangrippen 3 an die Modulplatte 2 transportiert, wo sie an ein in der Kühlmittelnut 9 fließendes Kühlmittel abgegeben wird. Über die Anschlusskupplungen 55 ist ein Kühlkreislauf angeschlossen, der das Kühlmittel kontinuierlich austauscht. Nutbodenerhebungen in der Kühlmittelnut 9 bewirken ein turbulentes Fließen des Kühlmittels, wodurch ein besonders guter Wärmeabtransport durch das Kühlmittel schon bei langsamen Fließgeschwindigkeiten erreicht wird.

Bei Badschmierung im Getriebe wird durch Rotation der Verzahnung und Reibung eine Ölströmung erzeugt, die durch die Auffangbereiche 14 geleitet wird. Dabei wird Wärme an die Fangrippen 3 abgegeben.

Bei Tauchschmierung im Getriebe wird durch die Rotation der Verzahnteile Öl in die Auffangbereiche 14 geschleudert. Bei Druckumlaufschmierung ist Öl in die Auffangbereiche 14 leitbar. Die verwendete Schmierung richtet sich nach der Bauform des Getriebes, d.h. nach der Orientierung des Getriebegehäuses relativ zur Richtung der Schwerkraft in montierter Form. Das Kühlmodul ist bei allen Bauformen vorteilhaft einsetzbar.

Auf diese Weise ist die Kühlung des Getriebes 40 durch den nachträglichen Einbau eines ersten Kühlmoduls 1 vorteilhaft verbesserbar.

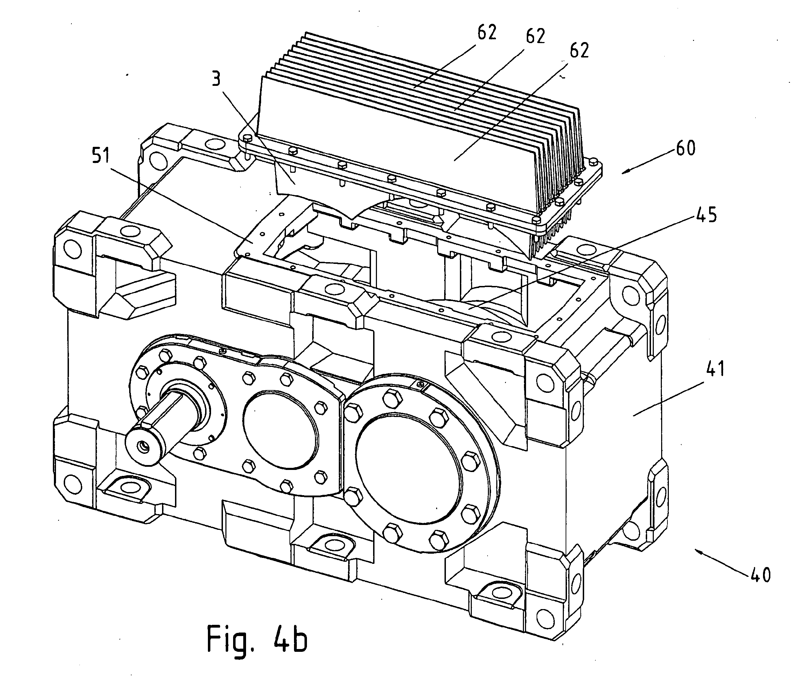

Figur 4b zeigt die erfindungsgemäße Verwendung eines weiteren Ausführungsbeispiels eines passiven Kühlmoduls. Ein passives Kühlmodul 60 wird auf die Gehäuseflanschfläche 51 des Getriebes 40 dicht aufgesetzt.

Das passive Kühlmodul 60 weist an seiner Unterseite parallel verlaufende Fangrippen 3 auf, die wie bei Figur 4a beschrieben in den Innenraum des Getriebegehäuses 41 hineinragen. Auf seiner Oberseite weist das passive Kühlmodul 60 parallel verlaufende Kühlrippen 62 auf. Die Kühlrippen 62 sind vorteilhaft zueinander kongruent ausgebildet.

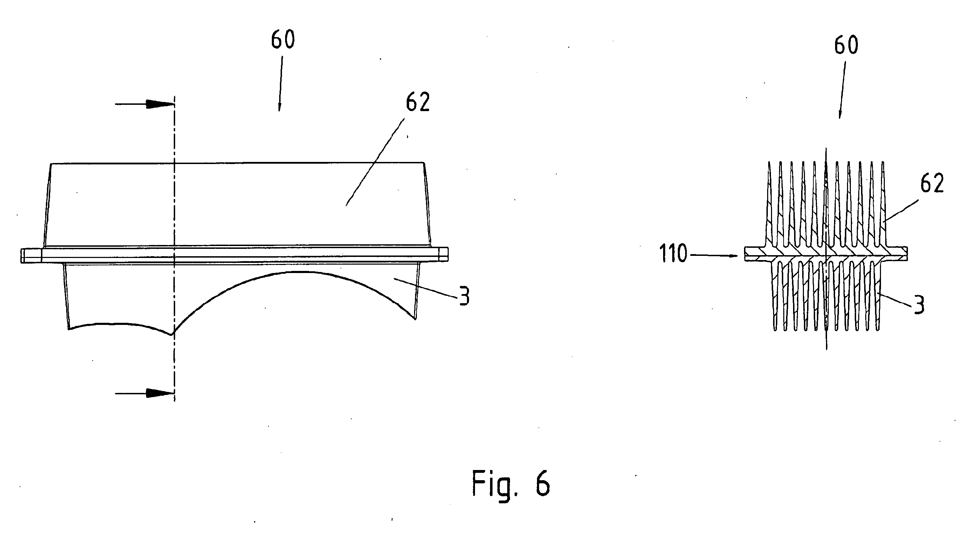

Vorteilhaft ist das passive Kühlmodul 60 zweiteilig ausgeführt, bestehend aus einem Oberteil mit Kühlrippen 62 und einem Unterteil mit Fangrippen 3. Eine solche Ausführung zeigt Figur 6, links in Seitenansicht und rechts als Querschnitt. Ober- und Unterteil sind an einer Kontaktfläche 110 miteinander verbunden. Bei weiteren Ausführungsbeispielen ist die Kontaktfläche zusätzlich mit einer Wärmeleitpaste bestrichen.

Bei weiteren Ausführungsbeispielen ist das passive Kühlmodul 60 einstückig, also insbesondere aus einem Guss, gefertigt.

Bei bestimmungsgemäßem Gebrauch des Getriebes 40 nehmen die Fangrippen 3 von den Zahnrädern 45 weggeschleudertes Öl auf, wodurch Wärme vom Getriebe 40 an die Fangrippen 3 transportiert wird. Letztere leiten die Wärme über den Körper des passiven Kühlmoduls 60 an die Kühlrippen 62 weiter, die die Wärme schließlich an die Umgebung, beispielsweise Luft, abgeben.

Vorteilhaft ist bei diesem Ausführungsbeispiel, dass ein Kühlmittelkreislauf verzichtbar und trotzdem die Kühlung des Getriebes 40 verbesserbar ist.

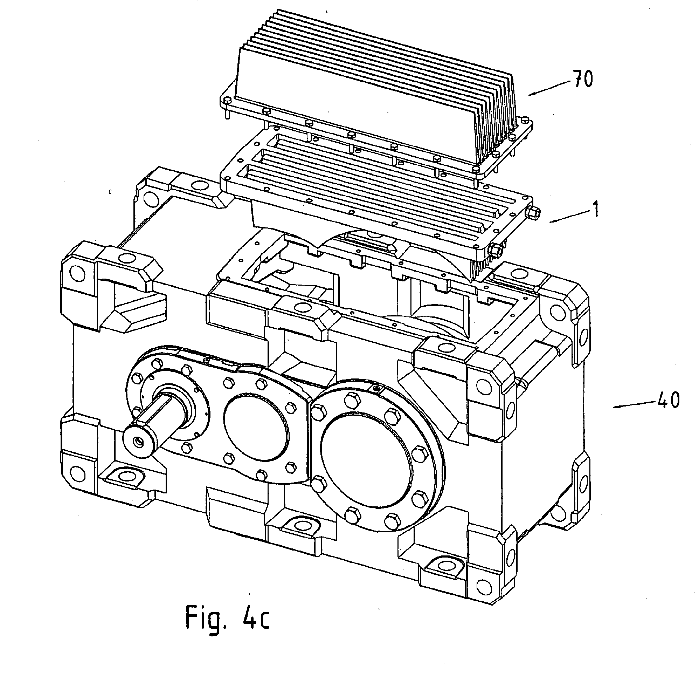

Figur 4c zeigt ein weiteres erfindungsgemäße Verwendungsbeispiel eines Kühlmoduls. Anstatt des Gehäusedeckels 49 in Figur 4a wird hier auf das erste Kühlmodul 1 ein erster Moduldeckel 70 aufgesetzt, der an seiner Oberseite parallel verlaufende Kühlrippen 62 aufweist.

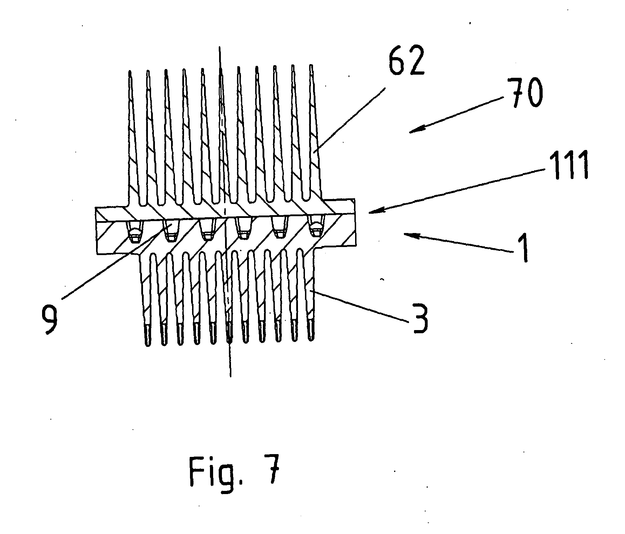

Ein solches Kühlmodul mit Moduldeckel zeigt Figur 7 im Querschnitt. Die Kontaktfläche 111, die den ersten Moduldeckel 70 mit dem ersten Kühlmodul 1 verbindet, weist nicht gezeigte Dichtungsmittel auf, um die Kühlmittelnut 9 dicht nach außen abzuschließen.

Die bestimmungsgemäße Verwendung des ersten Kühlmoduls 1 erfolgt wie bei Figur 4a beschrieben. Die Kühlleistung wird zusätzlich gesteigert durch die auf dem Moduldeckel vorgesehenen Kühlrippen 62, über die Wärme an die Umgebung abgebbar ist. Zusätzlich wird die Sicherheit erhöht, weil selbst bei Ausfall des Kühlmittelkreislaufs eine Notkühlung über die Kühlrippen 62 erfolgen kann.

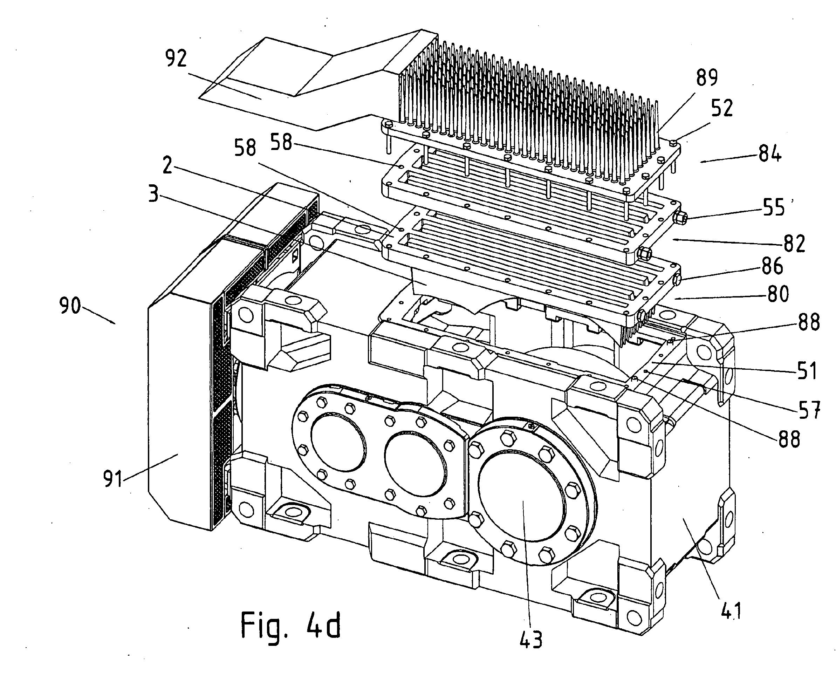

Figur 4d zeigt ein weiteres erfindungsgemäße Verwendungsbeispiel eines Kühlmoduls auf einem Kegelradgetriebe.

Im Unterschied zu Figur 4a wird auf die Gehäuseflanschfläche 51 ein Ölmodul 80 aufgesetzt, auf dieses ein Kühlmittelmodul 82 und auf dieses ein zweiter Moduldeckel 84. Durch das Aufsetzen wird jeweils eine dichte Verbindung hergestellt. Ölmodul 80, Kühlmittelmodul 82 und zweiter Moduldeckel 84 weisen jeweils einander entsprechende Bohrlöcher 58 auf, durch die Schrauben 52 führbar sind zur Verbindung der Module (80, 82) und des Deckels 84 mit dem Gehäuse 41. Die Schrauben greifen dabei in Gewindebohrungen 57. Jede Schraube 52 bewirkt vorteilhaft die Verbindung aller Module (80, 82) und des Deckels 84 mit dem Gehäuse 41 gleichermaßen.

Das Ölmodul 80 unterscheidet sich von dem ersten Kühlmodul 1 nach Figur 1 a und 4a dadurch, dass anstatt der Anschlusskupplungen 55 Blindstopfen 86 vorgesehen sind, die die Anschlussöffnungen 10 verschließen, und dass zusätzlich auf der Unterseite der Modulplatte 2 Bohrungen vorgesehen sind, die über die verschlossenen Anschlussöffnungen 10 in die Nutenden 11 münden.

Diese zusätzlichen Bohrungen passen beim Aufsetzen des Ölmoduls 80 auf an der Gehäuseflanschfläche 51 vorgesehene Anschlussstücke 88. Diese Anschlussstücke 88 sind jeweils als eingerolltes Rohr im Deckelflansch ausgeführt. Somit ist Öl, das durch eine Verrohrung mittels einer Pumpe im Inneren des Gehäuses 41 umgewälzt wird, durch das Ölmodul 80, insbesondere durch dessen Kühlmittelnut, leitbar. Somit ist Wärme vom Öl an die Kühlvorrichtung besonders vorteilhaft abgebbar, insbesondere bei abgesenktem Ölstand im Getriebegehäuse 41 oder bei - durch eine große Gesamtübersetzung bedingtem - langsamem Umlauf des abtriebsseitigen Zahnrads 45.

Die Verrohrung wird gebildet aus im Gehäuse und außerhalb des Gehäuses verlaufenden Rohren, durch die beispielsweise als Druckumlaufschmierung, insbesondere zur Zahnrad- oder Lagerschmierung, Öl gepumpt wird.

Die Pumpe ist als Wellenpumpe oder als elektrisch angetriebene Pumpe vorsehbar, die vorzugsweise an der Außenseite des Getriebegehäuses 41 befestigt ist.

Die Verrohrung und/oder die Pumpe weisen zusätzlich Ölfilter auf.

Bei einem weiteren Ausführungsbeispiel umfasst die Verrohrung eine Düse, über die Öl durch die Druckumlaufschmierung auf die Fangrippen 3 geleitet oder gespritzt wird.

Bei einem weiteren Ausführungsbeispiel sind die Anschlussstücke 88 als Bohrlöcher ausgebildet, die zusätzliche Dichtmittel aufweisen.

Das Kühlmittelmodul 82 in Figur 4d unterscheidet sich von dem ersten Kühlmodul 1 nach Figur 1a und 4a dadurch, dass Fangrippen 3 nicht vorgesehen sind. Nach Montage am Ölmodul 82 ist über Anschlusskupplungen ein Kühimittelkreislauf anschließbar, über den Wärme aus dem Ölmodul 80 abtransportierbar ist.

Der zweite Moduldeckel 84 in Figur 4d weist an seiner Oberseite Kühlfinger 89 auf, die in Längs- und Querreihen angeordnet sind. Über die Kühlfinger 89 ist Wärme vom Kühlmittelmodul 82 an die Umgebung, insbesondere an Luft, abgebbar.

Das Kegelradgetriebe in Figur 4d weist an einer Stirnseite, der Eintriebsseite 90 eine eintreibende Welle auf, auf die ein Lüfter 91 montiert ist. Die von dem Lüfter 91 bewegte Luft wird durch eine Luftleitvorrichtung 92 teilweise auf die Kühlfinger 89 des zweiten Moduldeckels 84 gelenkt, wodurch eine nochmals erhöhte Kühlleistung am Getriebe erreichbar ist.

Bei einem weiteren Ausführungsbeispiel ist kein Lüfter vorgesehen. Gegenüber dem ersten Moduldeckel 70 von Figur 6 wird in diesem Fall durch die Kühlfinger 69 bewirkt, dass Luft in mehr als einer Richtung konvektiv strömen kann. Somit ist, abhängig von der Orientierung des Getriebes im Raum - der Bauform -, eine verbesserte Wärmeabgabe erreichbar, auch ohne Lüfter.

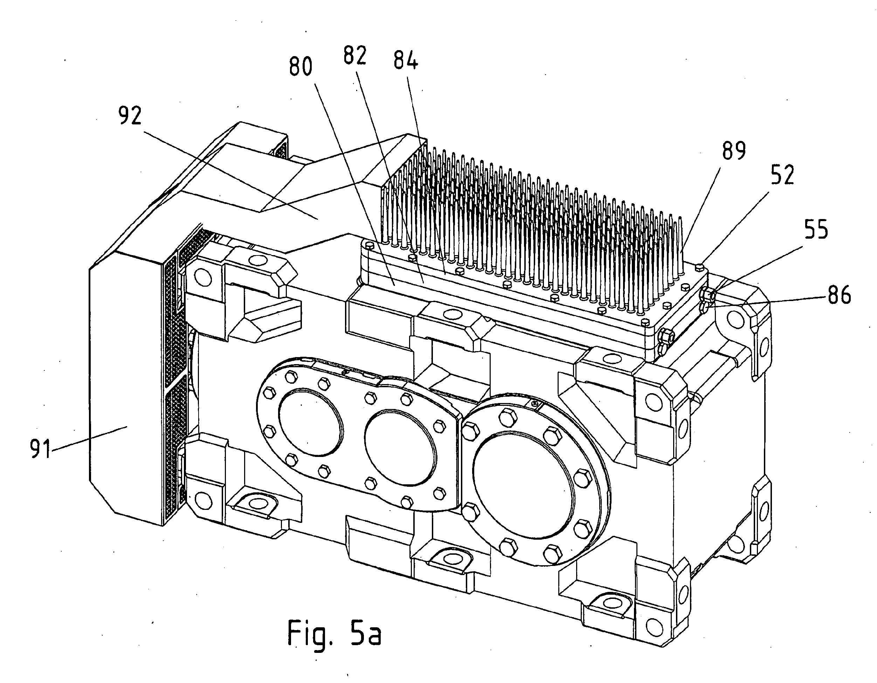

Figur 5a zeigt die Vorrichtung nach Figur 4d in zusammengebauter Form.

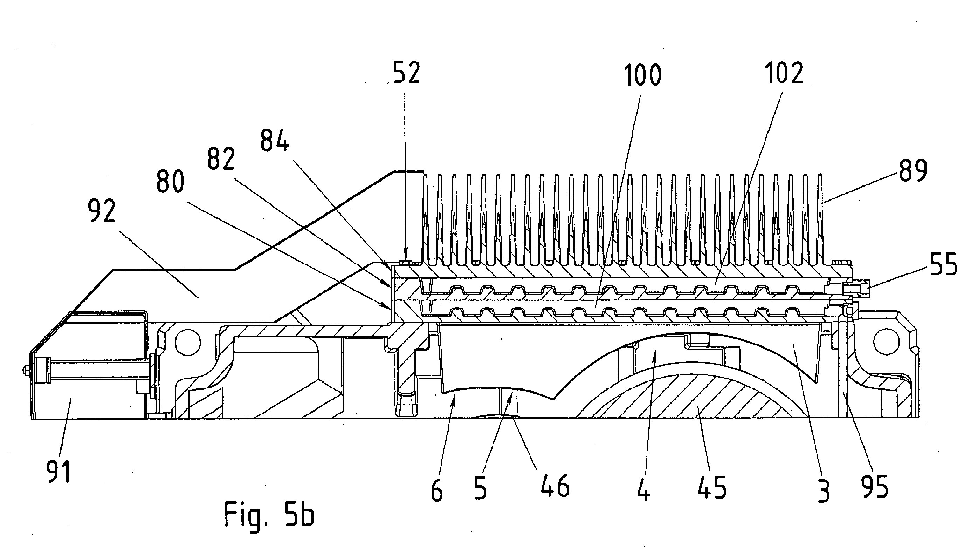

Figur 5b zeigt einen Längsschnitt durch einen Ausschnitt der in Figur 5a dargestellten Vorrichtung. Das Längsprofil der Fangrippen 3 folgt mit seiner kreisförmigen Einwölbung 4 der Form des Zahnrades 45. Die kreisförmigen Einwölbungen 5, 6 sind so ausgebildet, dass mit einem Längsprofil genügend Platz für verschiedene Zahnräder 46 ist, aber dennoch weggeschleudertes Öl gut aufnehmbar ist. Ein Abstand der Fangrippen von den Zahnrädern von ungefähr 5mm hat sich als besonders vorteilhaft zum Aufnehmen des Öls herausgestellt, es sind aber im Rahmen der Fertigungstoleranzen auch kleinere lichte Abstände denkbar-

Ölmodul 80, Kühlmittelmodul 82 und zweiter Moduldeckel 84 bilden einen Ölkanal 100 und einen Kühlmittelkanal 102. Durch Rohre 95 wird über die Pumpe der Druckumlaufschmierung Öl durch den ölkanal 100 gepumpt. Über Anschlusskupplungen 55 wird aus einem Kühlkreislauf Kühlmittel durch den Kühlmittelkanal 102 gepumpt. Ein Lüfter 91 führt über eine Luftleitvorrichtung 92 Luft über die Kühlfinger 89.

Die Vorrichtung nach Figur 4d, 5a und 5b bildet somit eine Vielzahl von Wegen, auf denen Wärme aus dem Getriebe an die Umgebung transportiert werden kann, Von Zahnrädern 45, 46 über weggeschleudertes Öl an Fangrippen 3 und weiter zum Ölmodul 80; vom Ölsumpf über Rohre 95 zum Ölmodul 80; vom Ölmodul 80 an das Kühlmittelmodul 82; vom Kühlmittelmodul 82 über das Kühlmittel im Kühlmittelkanal 102 an den Kühlmittelkreislauf; vom Kühlmittelmodul 82 über den zweiten Moduldeckel 84 an die Umgebungsluft.

Somit ist eine besonders hohe Kühlleistung für das Getriebe erreichbar.

Bei einem weiteren Ausführungsbeispiel ist statt des zweiten Moduldeckels 84 ein erster Moduldeckel 70 vorgesehen.

Bei einem weiteren Ausführungsbeispiel ist statt des zweiten Moduldeckels 84 der Gehäusedeckel 49 vorgesehen. In diesem Fall kann zumindest die Luftleitvorrichtung 92 entfallen.

Die Figur 4a bis 4d zeigen Ausführungsbeispiele für Kühlvorrichtungen, die sich besonders vorteilhaft aus einem Baukasten zusammensetzen lassen.

Insbesondere ist die Öffnung 47 als Schnittstelle ausgeführt zum Verbinden mit den verschiedenen Kühlmodulen oder Modulen oder Deckeln.

Somit sind eine Vielzahl von Abstufungen in der zusätzlichen Kühlleistung ermöglicht unter Einsatz einer geringen Teilevielfalt. Durch Kombination der verschiedenen Einzelmerkmale der beschriebenen Ausführungsbeispiele ergeben sich weitere Ausführungsbeispiele, die von der Erfindung mit umfasst sind.

Vorteilhaft sind hierzu die folgenden Eigenschaften:
i) Eine Mehrzahl von Getrieben weist eine identisch gestaltete Öffnung 47 auf.
ii) Die Grundplatten der Module mit mäanderförmiger Nut sind identisch gestaltet.
iii) Die Grundplatten der Module ohne Nut beziehungsweise Deckel, umfassend insbesondere den Gehäusedeckel der Öffnung, sind identisch gestaltet.
iv) Alle Grundplatten weisen ein gleiches Bohrbild, also Bohrlochmuster, auf, so dass sie über diese miteinander und mit dem Getriebegehäuse verbindbar sind.
v) Alle Grundplatten weisen zueinander passende Dichtungsmittel auf.
vi) Die Oberflächen der Grundplatten bilden jeweils eine Schnittstelle, umfassend zumindest Bohrbild, Ausformungen zum Dichten und Zentriermittel. Die Schnittstellen sind zueinander passend ausgebildet, wodurch die verschiedenen Module und Deckel sinnvoll miteinander kombinierbar sind.

Die Ausbildung der Schnittstelle ermöglicht somit vorteilhaft die Vielzahl von Kombinationsmöglichkeiten.

Insbesondere ist also der Gehäusedeckel, der auf der Öffnung eines Getriebes ohne erfindungsgemäße Kühlvorrichtung montiert ist, zur Abdeckung der Kühlmittelnut in einem zur Verbesserung der Kühlung zusätzlich eingesetzten Moduls verwendbar.

Durch den beschriebenen Baukasten für Kühlvorrichtungen an Getriebe wird besonders vorteilhaft erreicht, dass ein Getriebe einfach und kostengünstig nachrüstbar ist mit einer Kühlvorrichtung, wobei die zusätzliche Kühlleistung in Stufen steigerbar und somit besonders geeignet anpassbar ist.

## Patentansprüche

1. Kühlmodul für ein Getriebe,
wobei die dem Getriebeinneren zugewandte Ausformung des Kühlmoduls der Form eines rotierenden Teils oder mehrerer rotierender Teile des Getriebes folgt zur Verbesserung des Wärmeabtransportes aus dem Getriebeinneren mittels einer vergrößerten Oberfläche im Raumbereich des Ölstroms zwischen dem Teil oder den Teilen und dem Gehäuse,
wobei das Kühlmodul ein Gusstell umfasst,
wobei im Gussteil ein Raumbereich für strömendes Kühlmittel vorgesehen ist, der mittels des Gussteils und einer mit dem Gussteil dicht verbundenen Gehäuseplatte (49) begrenzt ist, **dadurch gekennzeichnet, dass**
am Gussteil ins Getriebeinnere gerichtete Kühlfinger angebracht sind, die mit dem Gussteil einstückig ausgeformt oder an das Gussteil angeschweißt sind,
wobei die Enden der Kühlfinger der Form des rotierenden Teils des Getriebes folgen und auf einem Kreisbogen angeordnet sind, wobei der Radius des Kreisbogens durch den Radius des rotierenden Teils bestimmt ist,
wobei der Raumbereich für das strömende Kühlmittel als mäanderförmige Nut ausgebildet ist.

2. Kühlmodul nach Anspruch 1,
**dadurch gekennzeichnet, dass**
das strömende Kühlmittel Luft oder eine Kühlflüssigkeit wie Öl oder Wasser ist.

3. Kühlmodul nach mindestens einem der vorangegangenen Ansprüche,
**dadurch gekennzeichnet, dass**
wobei ein erster Anteil der Enden der Kühlfinger der Form des ersten rotierenden Teils des Getriebes folgen und auf einem ersten Kreisbogen angeordnet sind, wobei der Radius des ersten Kreisbogens durch den Radius des ersten rotierenden Teils bestimmt ist,
wobei ein weitere Anteil der Enden der Kühlfinger der Form eines zweiten rotierenden Teils des Getriebes folgen und auf einem zweiten Kreisbogen angeordnet sind, wobei der Radius des zweiten Kreisbogens durch den Radius des zweiten rotierenden Teils bestimmt ist,
wobei der erste und der zweite Anteil durch die Schnittpunkte der beiden Kreisbögen voneinander getrennt sind.

4. Kühlmodul nach mindestens einem der vorangegangenen Ansprüche,
**dadurch gekennzeichnet, dass**
mit dem Kühlmodul eine Ausnehmung Öffnung, im Getriebegehäuse verschließbar ist, deren Umrandung eine Minimalfläche begrenzt, durch welche die Ausformung ins Innere des Getriebes hindurch ragt.

5. Kühlmodul nach mindestens einem der vorangegangenen Ansprüche,
**dadurch gekennzeichnet, dass**
die Ausformung Finger umfasst,
wobei der äußere Rand der Enden der Finger der Form des rotierenden Teils oder mehrerer rotierender Teile des Getriebes folgen.

6. Kühlmodul nach mindestens einem der vorangegangenen Ansprüche,
**dadurch gekennzeichnet, dass**
die Finger hohl ausgebildet sind zur Aufnahme eines Kühlmittels.

7. Kühlmodul nach mindestens einem der vorangegangenen Ansprüche,
**dadurch gekennzeichnet, dass**
die Ausformung sich In Bereiche neben den Seitenflächen von Zahnrädern des Getriebes erstreckt.

8. Kühlmodul nach mindestens einem der vorangegangenen Ansprüche,
**dadurch gekennzeichnet, dass**
sich die Ausformung entlang einer gedachten Ebene erstreckt, die transversal und rechtwinklig zur Wellenachse des rotierenden Teils verläuft.

## Claims

1. Cooling module for a gearing,
in which the shaping, facing the gearing interior, of the cooling module follows the shape of a rotating part or a plurality of rotating parts of the gearing in order to improve the removal of heat from the gearing interior by means of an increased surface in the spatial region of the oil flow between the part or parts and the housing,
in which the cooling module comprises a casting,
in which a spatial region for flowing coolant is provided in the casting, which region is delimited by means of the casting and a housing plate (49) connected in a sealed manner to the casting, **characterised in that**
cooling fingers directed into the gearing interior are attached to the casting, which fingers are formed in one piece with the casting or welded to the casting,
the ends of the cooling fingers following the shape of the rotating part of the gearing and being arranged on a circular arc, the radius of the circular arc being defined by the radius of the rotating part,
the spatial region for the flowing coolant being configured as a meander-shaped groove.

2. Cooling module according to Claim 1,
**characterised in that**
the flowing coolant is air or a cooling liquid such as oil or water.

3. Cooling module according to at least one of the preceding claims,
**characterised in that**
a first proportion of the ends of the cooling fingers follow the shape of the first rotating part of the gearing and are arranged on a first circular arc, the radius of the first circular arc being defined by the radius of the first rotating part,
a further proportion of the ends of the cooling fingers follow the shape of a second rotating part of the gearing and are arranged on a second circular arc, the radius of the second circular arc being defined by the radius of the second rotating part,
the first and the second proportion being separated from one another by the points of intersection of the two circular arcs.

4. Cooling module according to at least one of the preceding claims,
**characterised in that**
an opening in the gearing housing can be closed by the cooling module, the border of which opening delimits a minimal area through which the shaping projects into the interior of the gearing.

5. Cooling module according to at least one of the preceding claims,
**characterised in that**
the shaping comprises fingers,
the outer edge of the ends of the fingers following the shape of the rotating part or plurality of rotating parts of the gearing.

6. Cooling module according to at least one of the preceding claims,
**characterised in that**
the fingers are of hollow form in order to receive a coolant.

7. Cooling module according to at least one of the preceding claims,
**characterised in that**
the shaping extends in regions beside the lateral surfaces of gear wheels of the gearing.

8. Cooling module according to at least one of the preceding claims,
**characterised in that**
the shaping extends along an imaginary plane running transversely and at right angles to the shaft axis of the rotating part.

## Revendications

1. Module de refroidissement destiné à une transmission,
la zone déformée, en saillie sur ledit module de refroidissement et tournée vers l'espace interne de la transmission, épousant le profil d'un élément rotatif ou de plusieurs éléments rotatifs de ladite transmission en vue d'améliorer la dissipation de chaleur, depuis ledit espace interne de la transmission, à l'aide d'une superficie agrandie dans la région spatiale de l'écoulement d'huile entre le carter et ledit ou lesdits élément(s),
ledit module de refroidissement comprenant une pièce venue de fonderie,
sachant qu'il est prévu, dans ladite pièce venue de fonderie, une région spatiale dédiée à un fluide de refroidissement en circulation, et délimitée par ladite pièce venue de fonderie et par une platine (49) de carter reliée, de manière étanche, à ladite pièce venue de fonderie, **caractérisé par le fait**
**que** des ailettes de refroidissement, pointant dans l'espace interne de la transmission et ménagées sur la pièce venue de fonderie, sont façonnées d'un seul tenant avec ladite pièce venue de fonderie ou sont rapportées par soudage sur ladite pièce venue de fonderie,
les extrémités desdites ailettes de refroidissement épousant le profil de l'élément rotatif de la transmission et étant disposées sur un arc de cercle, le rayon dudit arc de cercle étant déterminé par le rayon dudit élément rotatif,
sachant que la région spatiale, dévolue au fluide de refroidissement en circulation, se présente comme une rainure en forme de méandres.

2. Module de refroidissement selon la revendication 1,
**caractérisé par le fait**
**que** le fluide de refroidissement en circulation est de l'air, ou un liquide de refroidissement tel que de l'huile ou de l'eau.

3. Module de refroidissement selon au moins l'une des revendications précédentes,
**caractérisé par le fait**
**qu'**une première partie des extrémités des ailettes de refroidissement épouse le profil du premier élément rotatif de la transmission et est disposée sur un premier arc de cercle, le rayon dudit premier arc de cercle étant déterminé par le rayon dudit premier élément rotatif,
une autre partie des extrémités desdites ailettes de refroidissement épousant le profil d'un second élément rotatif de la transmission et étant disposée sur un second arc de cercle, le rayon dudit second arc de cercle étant déterminé par le rayon dudit second élément rotatif, sachant que lesdites première et seconde parties sont séparées l'une de l'autre par les points d'intersection des deux arcs de cercle.

4. Module de refroidissement selon au moins l'une des revendications précédentes,
**caractérisé par le fait**
**que** ledit module de refroidissement permet d'obturer un évidement ou orifice pratiqué dans le carter de la transmission, et dont la bordure périphérique délimite une surface minimale par laquelle la zone déformée en saillie pointe dans l'espace interne de ladite transmission.

5. Module de refroidissement selon au moins l'une des revendications précédentes,
**caractérisé par le fait**
**que** la zone déformée en saillie comprend des protubérances,
le bord extérieur des extrémités desdites protubérances épousant le profil de l'élément rotatif ou de plusieurs éléments rotatifs de la transmission.

6. Module de refroidissement selon au moins l'une des revendications précédentes,
**caractérisé par le fait**
**que** les protubérances sont de réalisation creuse, en vue de recevoir un fluide de refroidissement.

7. Module de refroidissement selon au moins l'une des revendications précédentes,
**caractérisé par le fait**
**que** la zone déformée en saillie pénètre dans des régions jouxtant les faces latérales de roues dentées de la transmission.

8. Module de refroidissement selon au moins l'une des revendications précédentes,
**caractérisé par le fait**
**que** la zone déformée en saillie s'étend le long d'un plan imaginaire, dont le tracé est transversal et perpendiculaire à l'axe de l'arbre de l'élément rotatif.
